(19) Europäisches Patentamt
European Patent Office
Office européen des brevets

(11) **EP 4 779 857 A1**

(12) **EUROPEAN PATENT APPLICATION**
published in accordance with Art. 153(4) EPC

(43) Date of publication:
**22.07.2026   Bulletin 2026/30**

(21) Application number: **24900321.1**

(22) Date of filing: **25.10.2024**

(51) International Patent Classification (IPC):
**H02M 5/257** *(2006.01)*

(52) Cooperative Patent Classification (CPC):
**H02M 5/257**

(86) International application number:
**PCT/JP2024/038156**

(87) International publication number:
**WO 2025/121025 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **05.12.2023   JP 2023205263**

(71) Applicant: **Murata Manufacturing Co., Ltd.
Nagaokakyo-shi, Kyoto 617-8555 (JP)**

(72) Inventors:
• **YAMAMOTO, Yuta
Nagaokakyo-shi, Kyoto 617-8555 (JP)**
• **ISHIKURA, Yuki
Nagaokakyo-shi, Kyoto 617-8555 (JP)**
• **BHAGAT, Chinmay
Nagaokakyo-shi, Kyoto 617-8555 (JP)**

(74) Representative: **Lorenz Seidler Gossel Part. mbB
Widenmayerstr. 23
80538 München (DE)**

(54) **POWER CONVERSION CIRCUIT AND PROGRAM FOR POWER CONVERSION CIRCUIT**

(57)     A power conversion circuit (30) includes a plurality of bidirectional switches (TSW), and a controller (33). The controller (33) is configured to control the bidirectional switches (TSW) according to a first switching sequence or a second switching sequence. The controller (33) is configured to switch from a control according to the first switching sequence to a control according to the second switching sequence at the time when matching occurs between the ON/OFF state of the bidirectional switches TSW through which current flows in the control according to the first switching sequence and the ON/OFF state of the bidirectional switches TSW through which current flows in the control according to the second switching sequence to which the first switching sequence is to be switched.

FIG. 1

## Description

Technical Field

The present disclosure relates to a power conversion circuit, and a program for use in a power conversion circuit.

Background Art

A power conversion circuit disclosed in Patent Document 1 includes three input terminals, a plurality of switching elements, and a controller. The power conversion circuit is configured to, through ON/OFF control of the switching elements, convert three-phase alternating-current (AC) power input at an input terminal into single-phase AC power. The controller is configured to control the ON/OFF of individual switching elements.

Citation List

Patent Document

Patent Document 1: U.S. Patent Application Publication No. 2018/0262103

Summary of Invention

Technical Problem

A case is now considered where switching sequences are switched in the power conversion circuit. At this time, the pre-switching switching sequence and the post-switching switching sequence may have different combinations of ON/OFF states for a plurality of switching elements. In switching the ON/OFF of these switching elements in such a case, electrical stress is likely to be applied to a specific switch of the switching elements to be switched.

Solution to Problem

To address the above-mentioned issue, the present disclosure provides a power conversion circuit including a first input terminal, a second input terminal, a third input terminal, a plurality of bidirectional switches, a first output terminal, a second output terminal, and a controller. The first input terminal, the second input terminal, and the third input terminal are connected to a three-phase AC power source. A first voltage, a second voltage, and a third voltage are respectively input in a one-to-one correspondence to the first input terminal, the second input terminal, and the third input terminal. The first voltage, the second voltage, and the third voltage are AC voltages that differ in phase from each other. The plurality of bidirectional switches are each connected to a corresponding one of the first input terminal, the second input terminal, and the third input terminal. The first output terminal and the second output terminal are connected to the plurality of bidirectional switches, and configured to output AC power. The controller is configured to control the plurality of bidirectional switches according to a first switching sequence or a second switching sequence. The first switching sequence defines a plurality of combinations of ON/OFF states of the plurality of bidirectional switches and an order in which to switch between the plurality of combinations. The second switching sequence defines, in a manner different from the first switching sequence, a plurality of combinations of ON/OFF states of the plurality of bidirectional switches and an order in which to switch between the plurality of combinations. The controller is configured to switch from a control according to the first switching sequence to a control according to the second switching sequence at a time when matching occurs between an ON/OFF state of bidirectional switches through which current flows among the plurality of bidirectional switches in the control according to the first switching sequence and an ON/OFF state of bidirectional switches through which current flows among the plurality of bidirectional switches in the control according to the second switching sequence to which the first switching sequence is to be switched.

Further, the present disclosure provides a program for use in a power conversion circuit. The power conversion circuit includes a first input terminal, a second input terminal, a third input terminal, a plurality of bidirectional switches, a first output terminal, a second output terminal, and a controller. The first input terminal, the second input terminal, and the third input terminal are connected to a three-phase AC power source. A first voltage, a second voltage, and a third voltage are respectively input in a one-to-one correspondence to the first input terminal, the second input terminal, and the third input terminal. The first voltage, the second voltage, and the third voltage are AC voltages that differ in phase from each other. The plurality of bidirectional switches are each connected to a corresponding one of the first input terminal, the second input terminal, and the third input terminal. The first output terminal and the second output terminal are configured to output AC power. The controller is configured to control the plurality of bidirectional switches according to a first switching sequence or a second switching sequence. The first switching sequence defines a plurality of combinations of ON/OFF states of the plurality of bidirectional switches and an order in which to switch between the plurality of combinations. The second switching sequence defines, in a manner different from the first switching sequence, a plurality of combinations of ON/OFF states of the plurality of bidirectional switches and an order in which to switch between the plurality of combinations. The program causes the controller to switch from a control according to the first switching sequence to a control according to the second switching sequence at a time when matching occurs between an ON/OFF state of bidirectional switches through which current flows among the plurality of bidirectional switches in the control according to the first switching sequence, and an ON/OFF state of bidirectional switches through which current flows among the plurality of bidirectional switches in the control according to the second switching sequence to which the first switching sequence is to be switched.

Advantageous Effects of Invention

Application of electrical stress to a specific switch can be reduced.

Brief Description of Drawings

[Fig. 1] Fig. 1 is a circuit diagram of a power conversion device according to the present embodiment.
[Fig. 2] Fig. 2 illustrates the waveform and sectors of three-phase AC power.
[Fig. 3] Fig. 3 is a diagram illustrating space vectors in SVPWM.
[Fig. 4] Fig. 4 illustrates space vectors in SVPWM.
[Fig. 5] Fig. 5 is a sequence diagram of the ON/OFF control of switches in a sector 1a.
[Fig. 6] Fig. 6 is a sequence diagram of the ON/OFF control of switches in a sector 1b.
[Fig. 7] Fig. 7 is a sequence diagram of the ON/OFF control of switches in a sector 2a.
[Fig. 8] Fig. 8 illustrates an example of the correspondence between times during ON/OFF control of switches and switching states.
[Fig. 9] Fig. 9 illustrates how switching of switching sequences is controlled.
[Fig. 10] Fig. 10 illustrates how switching of switching sequences is controlled.
[Fig. 11] Fig. 11 illustrates how switching of switching sequences is controlled.
[Fig. 12] Fig. 12 illustrates how switching of switching sequences is controlled.
[Fig. 13] Fig. 13 illustrates how switching of switching sequences is controlled.
[Fig. 14] Fig. 14 illustrates how switching of switching sequences is controlled.
[Fig. 15] Fig. 15 illustrates how switching of switching sequences is controlled.

Description of Embodiments

<Embodiment of Power Conversion Circuit>

An embodiment of a power conversion circuit will now be described. The drawings are intended to be merely illustrative of an embodiment of the present disclosure, rather than limiting of the present disclosure. Terms such as "first", "second", and "third" are used solely for the purpose of distinguishing objects or features from each other, and are not to be construed as indicating, for example, any relative order among such objects or features.

(1. Configuration of Power Conversion Device)

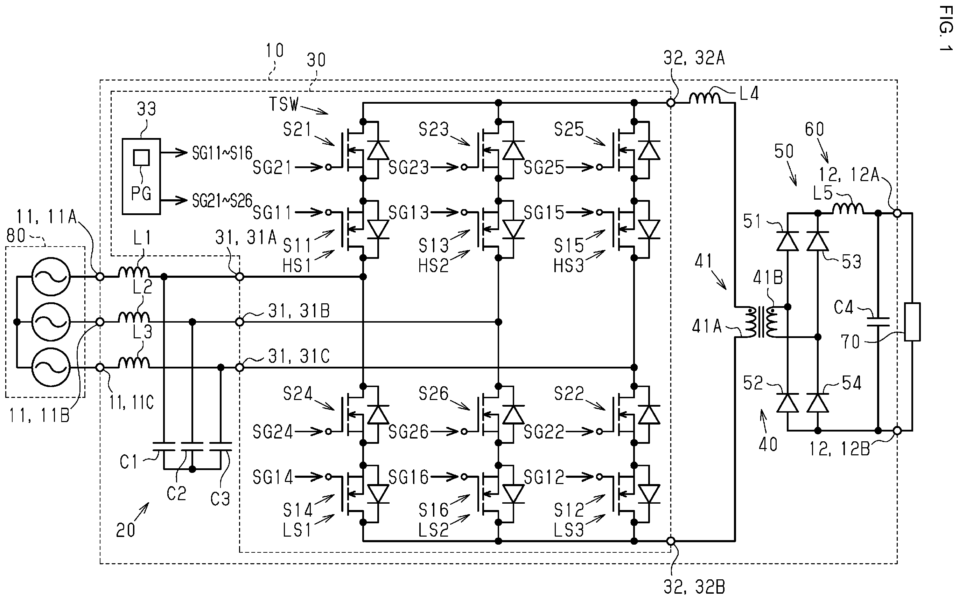

As illustrated in Fig. 1, a power conversion device 10 includes an input-side low pass filter 20, a power conversion circuit 30, a transformer circuit 40, a rectifier circuit 50, and an output-side low pass filter 60. The power conversion device 10 includes three external input terminals 11, and a pair of external output terminals 12. The power conversion device 10 is a so-called three-phase isolated AC-DC converter. That is, the power conversion device 10 is configured to convert three-phase AC power input at the external input terminals 11 into direct-current (DC) power, and output the DC power from the external output terminals 12. Since the transformer circuit 40 is present in the path of power from the external input terminals 11 to the external output terminals 12, the external input terminals 11 and the external output terminals 12 are electrically isolated.

The three external input terminals 11 of the power conversion device 10 include a first external input terminal 11A, a second external input terminal 11B, and a third external input terminal 11C. The three phases of three-phase AC power input from a three-phase AC power source 80 are input in a one-to-one correspondence to the three external input terminals 11. The three-phase AC power source 80 is a three-phase, three-wire commercial power system with three AC power sources connected in a Y-configuration.

The pair of external output terminals 12 include a first external output terminal 12A and a second external output terminal 12B. A given load 70 can be connected between the first external input terminal 11A and the second external output terminal 12B. The load 70 is, for example, an electronic device that is driven with DC power.

The input-side low pass filter 20 includes a first inductor L1, a second inductor L2, and a third inductor L3. The input-side low pass filter 20 also includes a first capacitor C1, a second capacitor C2, and a third capacitor C3.

A first end of the first inductor L1 is connected to the first external input terminal 11A. A first end of the first capacitor C1 is connected to a second end of the first inductor L1.

A first end of the second inductor L2 is connected to the second external input terminal 11B. A first end of the second capacitor C2 is connected to a second end of the second inductor L2. A second end of the second capacitor C2 is connected to a second end of the first capacitor C1.

A first end of the third inductor L3 is connected to the third external input terminal 11C. A first end of the third capacitor C3 is connected to a second end of the third inductor L3. A second end of the third capacitor C3 is connected to the second end of the first capacitor C1.

The power conversion circuit 30 includes a plurality of input terminals 31, a pair of output terminals 32, a plurality of bidirectional switches TSW, and a controller 33.

The input terminals 31 include a first input terminal 31A, a second input terminal 31B, and a third input terminal 31C. The first input terminal 31A is connected with the second end of the first inductor L1. The second input terminal 31B is connected with the second end of the second inductor L2. The third input terminal 31C is connected with the second end of the third inductor L3. Accordingly, three-phase AC power is input to the input terminals 31 of the power conversion circuit 30 via the external input terminals 11 and the input-side low pass filter 20. The pair of output terminals 32 include a first output terminal 32A and a second output terminal 32B. Single-phase AC power obtained through conversion by the bidirectional switches TSW is output from the pair of output terminals 32.

The bidirectional switches TSW each have two switching elements. Each switching element is an N-channel metal oxide semiconductor field effect transistor (MOSFET). That is, each switching element has a body diode. The two switching elements constituting each bidirectional switch TSW are connected in series such that the respective anode terminals of their body diodes are connected to each other. That is, the switching elements constituting each bidirectional switch TSW are connected to each other such that their respective body diodes are oriented in opposite directions. In other words, each bidirectional switch TSW has two switching elements with their respective source terminals connected to each other.

The bidirectional switches TSW include a first high-side bidirectional switch HS1, a first low-side bidirectional switch LS1, a second high-side bidirectional switch HS2, a second low-side bidirectional switch LS2, a third high-side bidirectional switch HS3, and a third low-side bidirectional switch LS3.

The first high-side bidirectional switch HS1 connects between the first input terminal 31A and the first output terminal 32A. Specifically, the first high-side bidirectional switch HS1 has an eleventh switching element S11 and a twenty-first switching element S21. The drain terminal of the eleventh switching element S11 is connected to the first input terminal 31A. The source terminal of the eleventh switching element S11 is connected to the source terminal of the twenty-first switching element S21. The drain terminal of the twenty-first switching element S21 is connected to the first output terminal 32A.

The first low-side bidirectional switch LS1 connects between the first input terminal 31A and the second output terminal 32B. Specifically, the first low-side bidirectional switch LS1 has a twenty-fourth switching element S24 and a fourteenth switching element S14. The drain terminal of the twenty-fourth switching element S24 is connected to the first input terminal 31A. The source terminal of the twenty-fourth switching element S24 is connected to the source terminal of the fourteenth switching element S14. The drain terminal of the fourteenth switching element S14 is connected to the second output terminal 32B.

The second high-side bidirectional switch HS2 connects between the second input terminal 31B and the first output terminal 32A. Specifically, the second high-side bidirectional switch HS2 has a thirteenth switching element S13 and a twenty-third switching element S23. The drain terminal of the thirteenth switching element S13 is connected to the second input terminal 31B. The source terminal of the thirteenth switching element S13 is connected to the source terminal of the twenty-third switching element S23. The drain terminal of the twenty-third switching element S23 is connected to the first output terminal 32A.

The second low-side bidirectional switch LS2 connects between the second input terminal 31B and the second output terminal 32B. Specifically, the second low-side bidirectional switch LS2 has a twenty-sixth switching element S26 and a sixteenth switching element S16. The drain terminal of the twenty-sixth switching element S26 is connected to the second input terminal 31B. The source terminal of the twenty-sixth switching element S26 is connected to the source terminal of the sixteenth switching element S16. The drain terminal of the sixteenth switching element S16 is connected to the second output terminal 32B.

The third high-side bidirectional switch HS3 connects between the third input terminal 31C and the first output terminal 32A. Specifically, the third high-side bidirectional switch HS3 has a fifteenth switching element S15 and a twenty-fifth switching element S25. The drain terminal of the fifteenth switching element S15 is connected to the third input terminal 31C. The source terminal of the fifteenth switching element S15 is connected to the source terminal of the twenty-fifth switching element S25. The drain terminal of the twenty-fifth switching element S25 is connected to the first output terminal 32A.

The third low-side bidirectional switch LS3 connects between the third input terminal 31C and the second output terminal 32B. Specifically, the third low-side bidirectional switch LS3 has a twenty-second switching element S22 and a twelfth switching element S12. The drain terminal of the twenty-second switching element S22 is connected to the third input terminal 31C. The source terminal of the twenty-second switching element S22 is connected to the source terminal of the twelfth switching element S12. The drain terminal of the twelfth switching element S12 is connected to the second output terminal 32B.

The controller 33 includes a memory and a processing unit (which are not illustrated). That is, the controller 33 is a microcontroller unit (MCU). The memory of the controller 33 stores a program PG to be executed by the processing unit.

Non-limiting examples of the processing unit include a central processing unit (CPU), a micro processing unit (MPU), a field programmable gate array (FPGA), a complex programmable logic device (CPLD), and an application specific integrated circuit (ASIC). The processing unit of the controller 33 is configured to, by executing the program PG, control the bidirectional switches TSW according to a switching sequence described later. Specifically, the power conversion device 10 includes a gate driving circuit (not illustrated). The gate driving circuit is configured to turn ON/OFF the two switching elements constituting each bidirectional switch TSW. The processing unit of the controller 33 is configured to control the ON/OFF of each switching element by causing a switching signal to be input to the input terminal of the gate driving circuit, and causing a gate driving voltage to be output to the switching element via the gate driving circuit. The switching signal includes eleventh to sixteenth switching signals SG11 to SG16, and twenty-first to twenty-sixth switching signals SG21 to SG26. The eleventh to sixteenth switching signals SG11 to SG16 respectively correspond one-to-one to the eleventh to sixteenth switching elements S11 to S16. The twenty-first to twenty-sixth switching signals SG21 to SG26 respectively correspond one-to-one to the twenty-first to twenty-sixth switching elements S21 to S26. Hereinafter, ON/-OFF control performed by the processing unit of the controller 33 will be referred to simply as "ON/OFF control performed by the controller 33."

Each bidirectional switch TSW can assume four ON/OFF states depending on the combination of ON/-OFF states of individual switching elements. This will now be described below with reference, by way of example, to the first high-side bidirectional switch HS1 and the first low-side bidirectional switch LS1.

The first state is bidirectionally ON. When the first high-side bidirectional switch HS1 is bidirectionally ON, the eleventh switching element S11 is ON, and the twenty-first switching element S21 is ON. When bidirectionally ON, the first high-side bidirectional switch HS1 allows current to flow from the first input terminal 31A to the first output terminal 32A, and also allows current to flow from the first output terminal 32A to the first input terminal 31A.

When the first low-side bidirectional switch LS1 is bidirectionally ON, the fourteenth switching element S14 is ON, and the twenty-fourth switching element S24 is ON. When bidirectionally ON, the first low-side bidirectional switch LS1 allows current to flow from the first input terminal 31A to the second output terminal 32B, and also allows current to flow from the second output terminal 32B to the first input terminal 31A.

The second state is ON in a positive direction. When the first high-side bidirectional switch HS1 is ON in the positive direction, the eleventh switching element S11 is ON, and the twenty-first switching element S21 is OFF. When ON in the positive direction, the first high-side bidirectional switch HS1 allows current to flow from the first input terminal 31A to the first output terminal 32A via the body diode of the twenty-first switching element S21. Meanwhile, the first high-side bidirectional switch HS1 does not allow current to flow from the first output terminal 32A to the first input terminal 31A.

When the first low-side bidirectional switch LS1 is ON in the positive direction, the fourteenth switching element S14 is ON, and the twenty-fourth switching element S24 is OFF. When ON in the positive direction, the first low-side bidirectional switch LS1 allows current to flow from the second output terminal 32B to the first input terminal 31A via the body diode of the twenty-fourth switching element S24. Meanwhile, the first low-side bidirectional switch LS1 does not allow current to flow from the first input terminal 31A to the second output terminal 32B.

The third state is ON in a negative direction. When the first high-side bidirectional switch HS1 is ON in the negative direction, the eleventh switching element S11 is OFF, and the twenty-first switching element S21 is ON. When ON in the negative direction, the first high-side bidirectional switch HS1 allows current to flow from the first output terminal 32A to the first input terminal 31A via the body diode of the eleventh switching element S11. Meanwhile, the first high-side bidirectional switch HS1 does not allow current to flow from the first input terminal 31A to the first output terminal 32A.

When the first low-side bidirectional switch LS1 is ON in the negative direction, the fourteenth switching element S14 is OFF, and the twenty-fourth switching element S24 is ON. When ON in the negative direction, the first low-side bidirectional switch LS1 allows current to flow from the first input terminal 31A to the second output terminal 32B via the body diode of the fourteenth switching element S14. Meanwhile, the first low-side bidirectional switch LS1 does not allow current to flow from the second output terminal 32B to the first input terminal 31A.

The fourth state is OFF. When the first high-side bidirectional switch HS1 is OFF, the eleventh switching element S11 is OFF, and the twenty-first switching element S21 is OFF. When OFF, the first high-side bidirectional switch HS1 neither allows current to flow from the first input terminal 31A to the first output terminal 32A, nor allows current to flow from the first output terminal 32A to the first input terminal 31A.

When the first low-side bidirectional switch LS1 is OFF, the fourteenth switching element S14 is OFF, and the twenty-fourth switching element S24 is OFF. When OFF, the first low-side bidirectional switch LS1 neither allows current to flow from the first input terminal 31A to the second output terminal 32B, nor allows current to flow from the second output terminal 32B to the first input terminal 31A.

The transformer circuit 40 includes a fourth inductor L4, and a transformer 41. The transformer 41 includes a primary winding 41A, and a secondary winding 41B. A first end of the fourth inductor L4 is connected to the first output terminal 32A of the power conversion circuit 30. A first end of the primary winding 41A is connected to a second end of the fourth inductor L4. A second end of the primary winding 41A is connected to the second output terminal 32B of the power conversion circuit 30. The secondary winding 41B is connected to the external output terminals 12 via the rectifier circuit 50 and the output-side low pass filter 60. The primary winding 41A and the secondary winding 41B are electrically isolated.

The rectifier circuit 50 is a full-wave rectifier circuit including four diodes. Specifically, the rectifier circuit 50 includes a first diode 51, a second diode 52, a third diode 53, and a fourth diode 54. The anode terminal of the first diode 51 is connected to a first end of the secondary winding 41B of the transformer 41. The cathode terminal of the first diode 51 is connected to the cathode terminal of the third diode 53. The anode terminal of the third diode 53 is connected to a second end of the secondary winding 41B and the cathode terminal of the fourth diode 54. The anode terminal of the fourth diode 54 is connected to the anode terminal of the second diode 52. The cathode terminal of the second diode 52 is connected to the first end of the secondary winding 41B and the anode terminal of the first diode 51.

The cathode terminal of the first diode 51 and the cathode terminal of the third diode 53 are connected to the first external output terminal 12A via the output-side low pass filter 60. The anode terminal of the second diode 52 and the anode terminal of the fourth diode 54 are connected to the second external output terminal 12B. Accordingly, the first diode 51 allows current to flow from the first end of the secondary winding 41B toward the first external output terminal 12A. The fourth diode 54 allows current to flow from the second external output terminal 12B to the second end of the secondary winding 41B. The third diode 53 allows current to flow from the second end of the secondary winding 41B toward the first external output terminal 12A. The second diode 52 allows current to flow from the second external output terminal 12B to the first end of the secondary winding 41B.

The output-side low pass filter 60 includes a fifth inductor L5, and a fourth capacitor C4. A first end of the fifth inductor L5 is connected to the cathode terminal of the first diode 51 and the cathode terminal of the third diode 53. A second end of the fifth inductor L5 is connected to the first external output terminal 12A. A first end of the fourth capacitor C4 is connected to the second end of the fifth inductor L5. A second end of the fourth capacitor C4 is connected to the second external output terminal 12B.

(2. Definition of Sector)

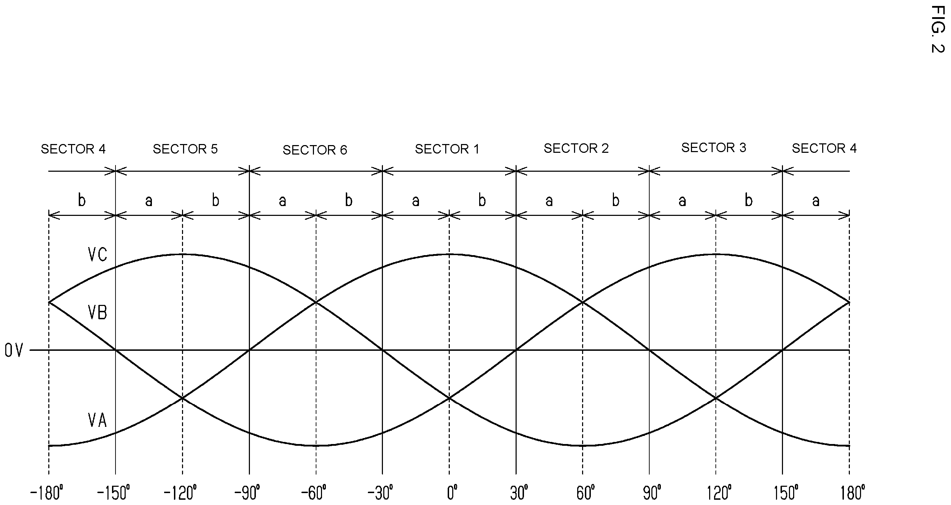

As described above, three-phase AC power is input from the three-phase AC power source 80 to the input terminals 31 of the power conversion circuit 30 via the external input terminals 11 and the input-side low pass filter 20. As illustrated in Fig. 2, the voltages of the three phases of the three-phase AC power include a first voltage VA, a second voltage VB, and a third voltage VC, which are AC voltages of different phases. These voltages are input in a one-to-one correspondence to the first input terminal 31A, the second input terminal 31B, and the third input terminal 31C. Specifically, the first voltage VA is input to the first input terminal 31A. The second voltage VB is input to the second input terminal 31B. The third voltage VC is input to the third input terminal 31C. The second voltage VB has a phase difference of 120° with respect to the first voltage VA. The third voltage VC has a phase difference of 120° with respect to the second voltage VB. It is to be noted that the "phase difference of 120°" allows for an error on the order of about ±1°.

Hereinafter, the phase at which the first voltage VA is at its maximum is defined as 0°. The phase at which the first voltage VA is at its minimum is defined as -180°. Accordingly, one period of each of the first voltage VA, the second voltage VB, and the third voltage VC is expressed in a phase range greater than or equal to -180° and less than 180°. For convenience, the phase of a voltage may also be expressed as a value greater than or equal to 180°. When the phase of a voltage is expressed as a value greater than or equal to 180°, X° is synonymous with (-180° + (X - 180°)). Now, the one period is divided into six equal intervals, which are herein defined as sectors 1 to 6. Specifically, when the phase of the first voltage VA is defined as "θ°", the sectors 1 to 6 are defined as the intervals of 60° as follows.

·Sector 1: -30° ≤ θ° < 30°
·Sector 2: 30° ≤ θ° < 90°
·Sector 3: 90° ≤ θ° < 150°
·Sector 4: 150° ≤ θ° < 180° and -180° ≤ θ° < -150°
·Sector 5: -150° ≤ θ° < -90°
·Sector 6: -90° ≤ θ° < -30°

Further, each of the sectors 1 to 6 is subdivided into two intervals. In other words, one period of three-phase AC power is subdivided into 12 intervals. Hereinafter, n represents an integer greater than or equal to 1 and less than or equal to 6, and the value of n corresponds to a sector number. In this case, a sector n is subdivided into two intervals defined as a sector na and a sector nb. According to the present embodiment, each interval is defined as follows.

· Sector na: (X° - 30°) ≤ θ° < X°
·Sector nb: X° ≤ θ° < (X° + 30°)

It is to be noted that X° is the value of the midpoint of the interval corresponding to the sector n. The term "the midpoint of the interval" refers to the value of the midpoint between the endpoints of each sector represented as a half-open interval. It is to be noted, however, that for a sector 4a, X = 180°.

(3. Vector Sequence)

Hereinafter, the difference in potential of the first output terminal 32A with respect to the second output terminal 32B is defined as a primary voltage Vp. That is, the primary voltage Vp is a voltage applied across the fourth inductor L4 and the primary winding 41A of the transformer 41. The current that flows between the first output terminal 32A and the second output terminal 32B is defined as a primary current Ip. That is, the primary current Ip is a current that flows through the fourth inductor L4 and the primary winding 41A of the transformer 41. The direction in which the primary current Ip flows from the first output terminal 32A to the second output terminal 32B is referred to as the positive direction. The direction in which the primary current Ip flows from the second output terminal 32B to the first output terminal 32A is referred to as the negative direction.

The phase corresponding to the first voltage VA is referred to as phase A, the phase corresponding to the second voltage VB is referred to as phase B, and the phase corresponding to the third voltage VC is referred to as phase C. Of the three phases, one phase is referred to as phase i, and a phase different from phase i is referred to as phase j. Hereinafter, the difference obtained by subtracting the voltage of phase j from the voltage of phase i is referred to as "line-to-line voltage Vij."

The controller 33 is configured to control the pulse width of each switching signal through space vector pulse width modulation (SVPWM).

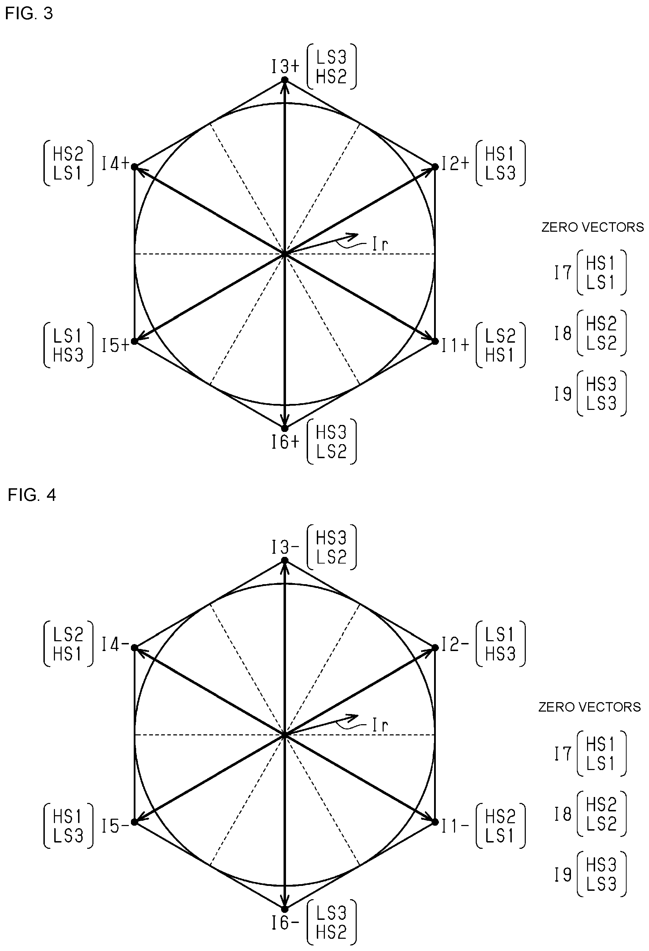

As illustrated in Figs. 3 and 4, active vectors and zero vectors Iz are defined in performing control by use of SVPWM. According to the present embodiment, active vectors and the zero vectors Iz are current vectors of the power conversion circuit 30 in a predetermined switching state. When m is an integer greater than or equal to 1 and less than or equal to 6, an active vector is represented as a space vector by the following equation denoted as Equation 1. It is to be noted, however, that in Equation 1, "I" is the absolute value of the primary current Ip.

[Eq. 1]

$$\vec{I_m} = \frac{2}{\sqrt{3}} I \cdot e^{j\left(\frac{m\pi}{3} - \frac{\pi}{2}\right)}$$

Active vectors are broadly divided into positive-direction active vectors and negative-direction active vectors.

Specifically, as illustrated in Fig. 3, the positive-direction active vectors include first to sixth positive-direction active vectors I1+ to I6+. The positive-direction active vectors are the current vectors when the primary voltage Vp has a positive value and the corresponding bidirectional switches TSW are in the following switching states.

· First positive-direction active vector I1+: The second low-side bidirectional switch LS2 is bidirectionally ON, or is ON in the positive direction. Further, the first high-side bidirectional switch HS1 is bidirectionally ON, or is ON in the positive direction. At this time, the primary voltage Vp is a line-to-line voltage VAB.

· Second positive-direction active vector I2+: The first high-side bidirectional switch HS1 is bidirectionally ON, or is ON in the positive direction. Further, the third low-side bidirectional switch LS3 is bidirectionally ON, or is ON in the positive direction. At this time, the primary voltage Vp is a line-to-line voltage VAC.

· Third positive-direction active vector I3+: The third low-side bidirectional switch LS3 is bidirectionally ON, or is ON in the positive direction. Further, the second high-side bidirectional switch HS2 is bidirectionally ON, or is ON in the positive direction. At this time, the primary voltage Vp is a line-to-line voltage VBC.

· Fourth positive-direction active vector I4+: The second high-side bidirectional switch HS2 is bidirectionally ON, or is ON in the positive direction. Further, the first low-side bidirectional switch LS1 is bidirectionally ON, or is ON in the positive direction. At this time, the primary voltage Vp is a line-to-line voltage VBA.

· Fifth positive-direction active vector I5+: The first low-side bidirectional switch LS1 is bidirectionally ON, or is ON in the positive direction. Further, the third high-side bidirectional switch HS3 is bidirectionally ON, or is ON in the positive direction. At this time, the primary voltage Vp is a line-to-line voltage VCA.

· Sixth positive-direction active vector I6+: The third high-side bidirectional switch HS3 is bidirectionally ON, or is ON in the positive direction. Further, the second low-side bidirectional switch LS2 is bidirectionally ON, or is ON in the positive direction. At this time, the primary voltage Vp is a line-to-line voltage VCB.

As illustrated in Fig. 4, the negative-direction active vectors include first to sixth negative-direction active vectors I1- to I6-. The negative-direction active vectors are the current vectors when the primary voltage Vp has a negative value and the corresponding bidirectional switches TSW are in the following switching states.

· First negative-direction active vector I1-: The second high-side bidirectional switch HS2 is bidirectionally ON, or is ON in the negative direction. Further, the first low-side bidirectional switch LS1 is bidirectionally ON, or is ON in the negative direction. At this time, the primary voltage Vp is a line-to-line voltage -VAB.

· Second negative-direction active vector I2-: The first low-side bidirectional switch LS1 is bidirectionally ON, or is ON in the negative direction. Further, the third high-side bidirectional switch HS3 is bidirectionally ON, or is ON in the negative direction. At this time, the primary voltage Vp is a line-to-line voltage -VAC.

· Third negative-direction active vector I3-: The third high-side bidirectional switch HS3 is bidirectionally ON, or is ON in the negative direction. Further, the second low-side bidirectional switch LS2 is bidirectionally ON, or is ON in the negative direction. At this time, the primary voltage Vp is a line-to-line voltage -VBC.

· Fourth negative-direction active vector 14-: The second low-side bidirectional switch LS2 is bidirectionally ON, or is ON in the negative direction. Further, the first high-side bidirectional switch HS1 is bidirectionally ON, or is ON in the negative direction. At this time, the primary voltage Vp is a line-to-line voltage -VBA.

· Fifth negative-direction active vector 15-: The first high-side bidirectional switch HS1 is bidirectionally ON, or is ON in the negative direction. Further, the third low-side bidirectional switch LS3 is bidirectionally ON, or is ON in the negative direction. At this time, the primary voltage Vp is a line-to-line voltage -VCA.

· Sixth negative-direction active vector I6-: The third low-side bidirectional switch LS3 is bidirectionally ON, or is ON in the negative direction. Further, the second high-side bidirectional switch HS2 is bidirectionally ON, or is ON in the negative direction. At this time, the primary voltage Vp is a line-to-line voltage -VCB.

As illustrated in Figs. 3 and 4, the zero vectors Iz include a seventh zero vector I7, an eighth zero vector I8, and a ninth zero vector I9. The zero vectors Iz are current vectors in the following switching states. In the switching states corresponding to the zero vectors Iz, the primary voltage Vp is zero. When it is stated that "the primary voltage Vp is zero", this allows for an error on the order of, for example, ±10 V.

· Seventh zero vector I7: The first high-side bidirectional switch HS1 is bidirectionally ON or is ON in the positive direction, and further, the first low-side bidirectional switch LS1 is bidirectionally ON or is ON in the positive direction. Alternatively, the first high-side bidirectional switch HS1 is bidirectionally ON or is ON in the negative direction, and the first low-side bidirectional switch LS1 is bidirectionally ON or is ON in the negative direction.

· Eighth zero vector I8: The second high-side bidirectional switch HS2 is bidirectionally ON or is ON in the positive direction, and the second low-side bidirectional switch LS2 is bidirectionally ON or is ON in the positive direction. Alternatively, the second high-side bidirectional switch HS2 is bidirectionally ON or is ON in the negative direction, and the second low-side bidirectional switch LS2 is bidirectionally ON or is ON in the negative direction.

· Ninth zero vector I9: The third high-side bidirectional switch HS3 is bidirectionally ON or is ON in the positive direction, and the third low-side bidirectional switch LS3 is bidirectionally ON or is ON in the positive direction. Alternatively, the third high-side bidirectional switch HS3 is bidirectionally ON or is ON in the negative direction, and the third low-side bidirectional switch LS3 is bidirectionally ON or is ON in the negative direction.

A reference vector Ir for current in the sector n is approximated as the resultant vector of the active vectors and the zero vector Iz mentioned above. Specifically, when $x = n$ and $y = x + 1$ (however, $y = 1$ when $x = 6$), the reference vector Ir for current in the sector n is approximated as the resultant vector of the x-th positive-direction active vector Ix+, the y-th positive-direction active vector Iy+, and the zero vector Iz. Alternatively, the reference vector Ir for current in the sector n is approximated as the resultant vector of the x-th negative-direction active vector Ix-, the y-th negative-direction active vector Iy-, and the zero vector Iz. It is to be noted that the zero vector Iz is the seventh zero vector I7 in the sectors 1 and 4. The zero vector Iz is the ninth zero vector I9 in sectors 2 and 5. The zero vector Iz is the eighth zero vector I8 in the sectors 3 and 6.

The controller 33 is configured to, in principle, control the ON/OFF of individual bidirectional switches TSW according to the magnitude relationship between the first voltage VA, the second voltage VB, and the third voltage VC, such that the reference vector Ir transitions between the active vectors and the zero vector Iz in a predetermined order.

Specifically, in the sector na, the controller 33 controls the ON/OFF of individual bidirectional switches TSW such that the reference vector Ir follows the vector sequence described in (na) below. In the sector nb, the controller 33 controls the ON/OFF of individual bidirectional switches TSW such that the reference vector Ir follows the vector sequence described in (nb) below.

(na) The x-th positive-direction active vector Ix+, the y-th positive-direction active vector Iy+, the zero vector Iz, the x-th negative-direction active vector Ix-, the y-th negative-direction active vector Iy-, and the zero vector Iz.

(nb) The y-th positive-direction active vector Iy+, the x-th positive-direction active vector Ix+, the zero vector Iz, the y-th negative-direction active vector Iy-, the x-th negative-direction active vector Ix-, and the zero vector Iz.

In the sector na, the controller 33 repeats, with a predetermined period Ts, the ON/OFF control of individual bidirectional switches TSW based on the vector sequence described above in (na). The period Ts is very short relative to the interval corresponding to each sector na.

In the sector nb, the controller 33 repeats, with the same period Ts as that for the vector sequence described above in (na), the ON/OFF control of individual bidirectional switches TSW based on the vector sequence described above in (nb). The period Ts is very short relative to the interval corresponding to each sector nb.

(4. Switching Sequence)

The memory of the controller 33 stores a plurality of switching sequences as part of the program PG. Each switching sequence defines how the ON/OFF states of the bidirectional switches TSW are switched based on the corresponding vector sequence. Specifically, each switching sequence defines a plurality of combinations of ON/OFF states of the bidirectional switches TSW and the order of these combinations.

The following describes, by way of example, how the ON/OFF of the bidirectional switches TSW is controlled in sectors 1a, 1b, and 2a according to the corresponding switching sequence. The switching sequence in the sector na will be referred to as a switching sequence na. The switching sequence in the sector nb will be referred to as a switching sequence nb.

(4-1. Switching Sequence 1a)

As illustrated in Fig. 2, in the sector 1a, of the first to third voltages VA to VC, the first voltage VA is the greatest. Further, the third voltage VC is greater than or equal to the second voltage VB. In the sector 1a, the absolute value of the first voltage VA is the greatest. Further, the absolute value of the second voltage VB is greater than the absolute value of the third voltage VC.

As illustrated in Figs. 3 and 4, in the sector 1a, the controller 33 controls, in principle, the ON/OFF of individual bidirectional switches TSW such that the reference vector Ir follows the vector sequence described in (1a) below. Accordingly, a switching sequence 1a is defined based on the vector sequence described in (1a) below.

(1a) The first positive-direction active vector I1+, the second positive-direction active vector I2+, the seventh zero vector I7, the first negative-direction active vector I1-, the second negative-direction active vector I2-, and the seventh zero vector I7.

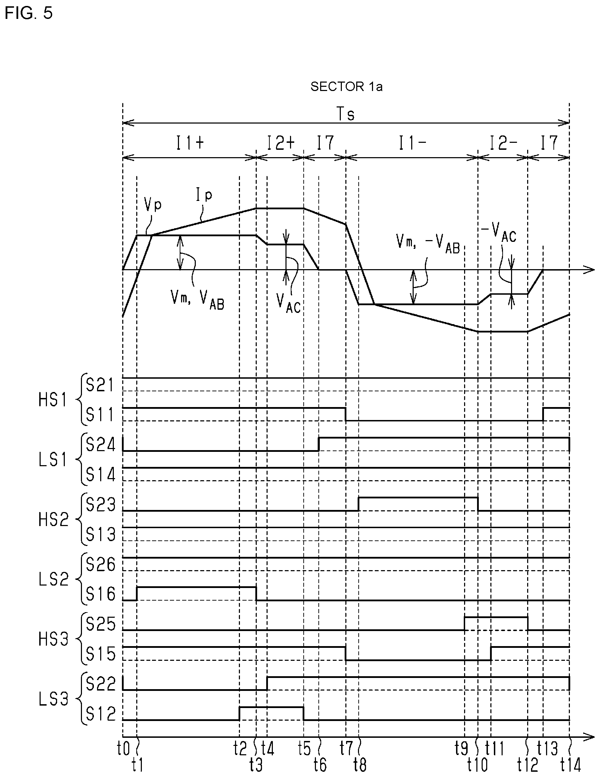

The switching sequence 1a within one period Ts in the sector 1a will now be described. As illustrated in Fig. 5, the one period Ts spans from time t0 to time t14. Time t0 coincides with time t14 in the immediately preceding period Ts. Accordingly, the state immediately before time t0 coincides with the state at time t13 in the immediately preceding period Ts. That is, in the state immediately before time t0, the reference vector Ir is the seventh zero vector I7. At this time, the first high-side bidirectional switch HS1 is bidirectionally ON. Further, the first low-side bidirectional switch LS1 is bidirectionally ON. The second high-side bidirectional switch HS2 is ON in the positive direction. The second low-side bidirectional switch LS2 is ON in the negative direction. The third high-side bidirectional switch HS3 is ON in the positive direction. The third low-side bidirectional switch LS3 is ON in the negative direction. In the state immediately before time t0, the primary voltage Vp is substantially zero.

At time t0 in the sector 1a, in other words, at time t14 in the immediately preceding period Ts, the controller 33 controls the first low-side bidirectional switch LS1 to be ON in the positive direction. Further, at time t0, the controller 33 controls the third low-side bidirectional switch LS3 to be OFF.

During the interval from time t0 to time t3, the reference vector Ir is the first positive-direction active vector I1+. The controller 33 controls the ON/OFF of individual switching elements such that, at time t3, the reference vector Ir transitions to the second positive-direction active vector I2+.

Specifically, at time t1, the controller 33 controls the second low-side bidirectional switch LS2 to be bidirectionally ON. Subsequently, at time t2, the controller 33 controls the third low-side bidirectional switch LS3 to be ON in the positive direction. At time t3, the controller 33 controls the second low-side bidirectional switch LS2 to be ON in the negative direction. It is to be noted that from time t0 to time t1, the primary voltage Vp increases from zero to the line-to-line voltage VAB. During the interval from time t1 to time t3, the primary voltage Vp remains substantially constant at the line-to-line voltage VAB.

During the interval from time t3 to time t5, the reference vector Ir is the second positive-direction active vector I2+. The controller 33 controls the ON/OFF of individual switching elements such that, at time t5, the reference vector Ir transitions to the seventh zero vector I7.

Specifically, at time t4, the controller 33 controls the third low-side bidirectional switch LS3 to be bidirectionally ON. At time t5, the controller 33 controls the third low-side bidirectional switch LS3 to be ON in the negative direction. It to be noted that from time t3 to time t4, the primary voltage Vp decreases from the line-to-line voltage VAB to the line-to-line voltage VAC. During the interval from time t4 to time t5, the primary voltage Vp remains substantially constant at the line-to-line voltage VAC.

During the interval from time t5 to time t7, the reference vector Ir is the seventh zero vector I7. The controller 33 controls the ON/OFF of individual switching elements such that, at time t7, the reference vector Ir transitions to the first negative-direction active vector I1-.

Specifically, at time t6, the controller 33 controls the first low-side bidirectional switch LS1 to be bidirectionally ON. At time t7, the controller 33 controls the first high-side bidirectional switch HS1 to be ON in the negative direction. Further, at time t7, the controller 33 controls the third high-side bidirectional switch HS3 to be OFF. It to be noted that from time t5 to time t6, the primary voltage Vp decreases from the line-to-line voltage VAC to zero. During the interval from time t6 to time t7, the primary voltage Vp remains substantially zero.

During the interval from time t7 to time t10, the reference vector Ir is the first negative-direction active vector I1-. The controller 33 controls the ON/OFF of individual switching elements such that, at time t10, the reference vector Ir transitions to the second negative-direction active vector I2-.

Specifically, at time t8, the controller 33 controls the second high-side bidirectional switch HS2 to be bidirectionally ON. At time t9, the controller 33 controls the third high-side bidirectional switch HS3 to be ON in the negative direction. At time t10, the controller 33 controls the second high-side bidirectional switch HS2 to be ON in the positive direction.

From time t7 to time t8, the primary voltage Vp decreases from zero to the line-to-line voltage VBA. During the interval from time t8 to time t10, the primary voltage Vp remains substantially constant at the line-to-line voltage VBA. It is to be noted that for convenience, the line-to-line voltage Vij is denoted as "-Vji" in Figs. 5 to 7.

As illustrated in Fig. 5, during the interval from time t10 to time t12, the reference vector Ir is the second negative-direction active vector I2-. The controller 33 controls the ON/OFF of individual switching elements such that, at time t12, the reference vector Ir transitions to the seventh zero vector I7.

Specifically, at time t11, the controller 33 controls the third high-side bidirectional switch HS3 to be bidirectionally ON. At time t12, the controller 33 controls the third high-side bidirectional switch HS3 to be ON in the positive direction. It to be noted that from time t10 to time t11, the primary voltage Vp increases from the line-to-line voltage VBA to the line-to-line voltage VCA. During the interval from time t11 to time t12, the primary voltage Vp remains substantially constant at the line-to-line voltage VCA.

During the interval from time t12 to time t14, the reference vector Ir is the seventh zero vector I7. As described above, the state at time t14 coincides with the ON/OFF state of individual switching elements at time t0. That is, the controller 33 controls the ON/OFF of individual switching elements such that, at time t0 in the next period Ts, the reference vector Ir transitions to the first positive-direction active vector I1+.

Specifically, at time t13, the controller 33 controls the first high-side bidirectional switch HS1 to be bidirectionally ON. At time t14, the controller 33 controls the first low-side bidirectional switch LS1 to be ON in the positive direction. Further, the controller 33 controls the third low-side bidirectional switch LS3 to be OFF. One period Ts ends once the switches are switched at time t14.

It to be noted that from time t12 to time t13, the primary voltage Vp increases from the line-to-line voltage VCA to zero. During the interval from time t13 to time t14, the primary voltage Vp remains zero.

## (4-2. Switching Sequence 1b)

As illustrated in Fig. 2, in the sector 1b, of the first to third voltages VA to VC, the first voltage VA is the greatest. Further, the second voltage VB is greater than or equal to the third voltage VC. In the sector 1b, the absolute value of the first voltage VA is the greatest. Further, the absolute value of the third voltage VC is greater than the absolute value of the second voltage VB.

As illustrated in Figs. 3 and 4, in the sector 1b, the controller 33 controls, in principle, the ON/OFF of individual bidirectional switches TSW such that the reference vector Ir follows the vector sequence described in (1b) below. Accordingly, a switching sequence 1b is defined based on the vector sequence described in (1b) below.

(1b) The second positive-direction active vector I2+, the first positive-direction active vector I1+, the seventh zero vector I7, the second negative-direction active vector I2-, the first negative-direction active vector I1-, and the seventh zero vector I7.

Accordingly, the pattern of ON/OFF control performed by the controller 33 according to the switching sequence 1b is as described below based on, for example, the magnitude relationship between individual voltages and the vector sequence.

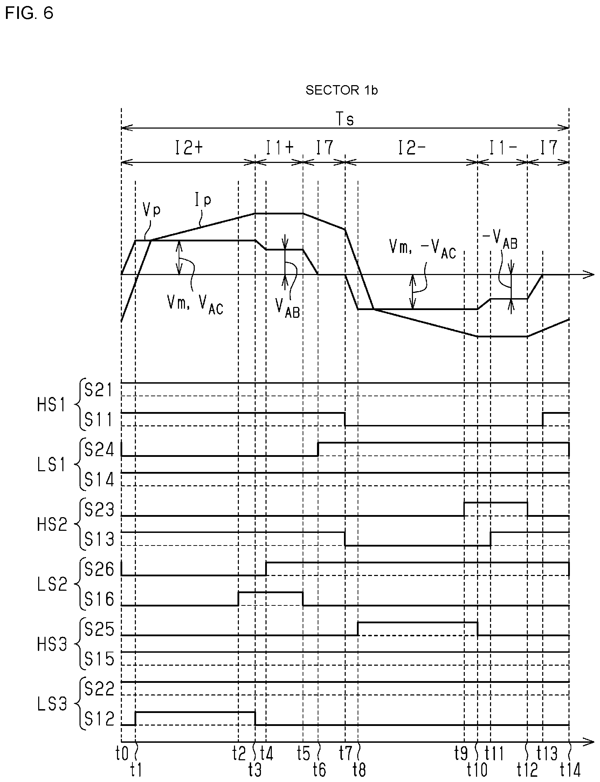

As illustrated in Figs. 5 and 6, the pattern of ON/OFF control of the first high-side bidirectional switch HS1 in the sector 1b performed by the controller 33 is the same as the pattern of ON/OFF control of the first high-side bidirectional switch HS1 in the sector 1a. The pattern of ON/OFF control of the first low-side bidirectional switch LS1 in the sector 1b is the same as the pattern of ON/OFF control of the first low-side bidirectional switch LS1 in the sector 1a.

The pattern of ON/OFF control of the second high-side bidirectional switch HS2 in the sector 1b is the same as the pattern of ON/OFF control of the third high-side bidirectional switch HS3 in the sector 1a. The pattern of ON/OFF control of the second low-side bidirectional switch LS2 in the sector 1b is the same as the pattern of ON/OFF control of the third low-side bidirectional switch LS3 in the sector 1a.

The pattern of ON/OFF control of the third high-side bidirectional switch HS3 in the sector 1b is the same as the pattern of ON/OFF control of the second high-side bidirectional switch HS2 in the sector 1a. The pattern of ON/OFF control of the third low-side bidirectional switch LS3 in the sector 1b is the same as the pattern of ON/OFF control of the second low-side bidirectional switch LS2 in the sector 1a.

As illustrated in Fig. 6, in the sector 1b, during the interval in which the reference vector Ir is the second positive-direction active vector I2+, the primary voltage Vp is the line-to-line voltage VAC. During the interval in which the reference vector Ir is the first positive-direction active vector I1+, the primary voltage Vp is the line-to-line voltage VAB. During the interval in which the reference vector Ir is the second negative-direction active vector I2-, the primary voltage Vp is the line-to-line voltage VBA. During the interval in which the reference vector Ir is the first negative-direction active vector I1-, the primary voltage Vp is the line-to-line voltage VBA.

(4-3. Switching Sequence 2a)

As illustrated in Fig. 2, in the sector 2a, of the first to third voltages VA to VC, the first voltage VA is the greatest. Further, the second voltage VB is greater than or equal to the third voltage VC. In the sector 2a, the absolute value of the third voltage VC is the greatest. Further, the absolute value of the first voltage VA is greater than the absolute value of the second voltage VB.

As illustrated in Figs. 3 and 4, in the sector 2a, the controller 33 controls, in principle, the ON/OFF of individual bidirectional switches TSW such that the reference vector Ir follows the vector sequence described in (2a) below. Accordingly, a switching sequence 2a is defined based on the vector sequence described in (2a) below.

(2a) The second positive-direction active vector I2+, the third positive-direction active vector I3+, the ninth zero vector I9, the second negative-direction active vector I2-, the third negative-direction active vector I3-, and the ninth zero vector I9.

Accordingly, the pattern of ON/OFF control performed by the controller 33 according to the switching sequence 2a is as described below based on, for example, the magnitude relationship between individual voltages and the vector sequence.

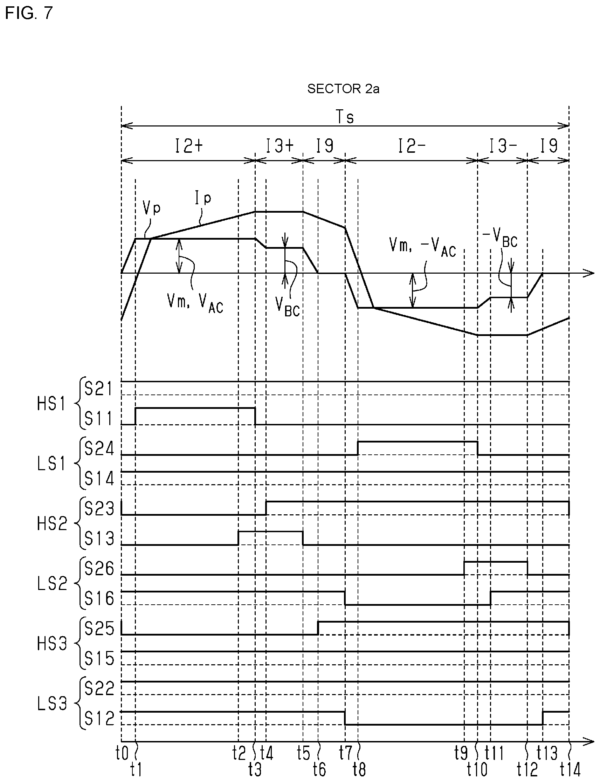

As illustrated in Figs. 5 and 7, the pattern of ON/OFF control of the first high-side bidirectional switch HS1 in the sector 2a performed by the controller 33 is the same as the pattern of ON/OFF control of the second low-side bidirectional switch LS2 in the sector 1a. The pattern of ON/OFF control of the first low-side bidirectional switch LS1 in the sector 2a is the same as the pattern of ON/OFF control of the second high-side bidirectional switch HS2 in the sector 1a.

The pattern of ON/OFF control of the second high-side bidirectional switch HS2 in the sector 2a is the same as the pattern of ON/OFF control of the third low-side bidirectional switch LS3 in the sector 1a. The pattern of ON/OFF control of the second low-side bidirectional switch LS2 in the sector 2a is the same as the pattern of ON/OFF control of the third high-side bidirectional switch HS3 in the sector 1a.

The pattern of ON/OFF control of the third high-side bidirectional switch HS3 in the sector 2a is the same as the pattern of ON/OFF control of the first low-side bidirectional switch LS1 in the sector 1a. The pattern of ON/OFF control of the third low-side bidirectional switch LS3 in the sector 2a is the same as the pattern of ON/OFF control of the first high-side bidirectional switch HS1 in the sector 1a.

As illustrated in Fig. 7, in the sector 2a, during the interval in which the reference vector Ir is the second positive-direction active vector I2+, the primary voltage Vp is the line-to-line voltage VAC. During the interval in which the reference vector Ir is the third positive-direction active vector I3+, the primary voltage Vp is the line-to-line voltage VBC. During the interval in which the reference vector Ir is the second negative-direction active vector I2-, the primary voltage Vp is the line-to-line voltage VCA. During the interval in which the reference vector Ir is the third negative-direction active vector I3-, the primary voltage Vp is the line-to-line voltage VCB.

(5. Switching Control of Switching Sequences)

The switching control from a given switching sequence to a different switching sequence will now be described.

Hereinafter, a given pre-switching switching sequence will be referred to as a first switching sequence. Further, a switching sequence that defines a plurality of combinations of ON/OFF states of the bidirectional switches TSW in a manner different from the first switching sequence, and to which the first switching sequence is switched will be referred to as a second switching sequence. In other words, the first switching sequence defines a plurality of combinations of ON/OFF states of the bidirectional switches TSW and the order in which to switch between these combinations. The second switching sequence defines, in a manner different from the first switching sequence, a plurality of combinations of ON/OFF states of the bidirectional switches TSW and the order in which to switch between these combinations.

The controller 33 switches from the control according to the first switching sequence to the control according to the second switching sequence at the time when matching occurs between the ON/OFF state of the bidirectional switches TSW through which current flows in the control according to the first switching sequence and the ON/OFF state of the bidirectional switches TSW through which current flows in the control according to the second switching sequence to which the first switching sequence is to be switched.

When reference is made below to the "bidirectional switches TSW through which current flows in a control according to a switching sequence", this means the bidirectional switches TSW through which current actually flows due to electromotive force in a control according to the corresponding switching sequence. That is, the "bidirectional switches TSW through which current flows" mentioned above does not refer to a combination of the bidirectional switches TSW that can theoretically conduct current. In other words, the combination of the bidirectional switches TSW is a combination that satisfies both of the following requirements (A) and (B).

(A) A combination of the bidirectional switches TSW that serves as a current conduction path at a specific time in the first switching sequence, and that also serves as a current conduction path at a specific time in the second switching sequence.

(B) A combination of the bidirectional switches TSW that satisfies the requirement (A), and in which the ON/OFF state when current flows at the specific time in the first switching sequence matches the ON/OFF state when current flows at the specific time in the second switching sequence.

The following describes, by way of example, the switching control from the switching sequence 1a to the switching sequence 1b, and the switching control from the switching sequence 1b to the switching sequence 2a.

The combination of ON/OFF states of the bidirectional switches TSW at each given time in each of the switching sequences is referred to as a "switching state." As described above, in each switching sequence, the switching states are switched at each of times t1 to t14. That is, each switching sequence includes 14 switching states. Here, $k = (n - 1) \times 28$. At this time, the 14 switching states defined by the switching sequence na are the (k+1) th to (k+14)th switching states. The 14 switching states defined by the switching sequence nb are the (k+15)th to (k+28)th switching states.

For example, a switching sequence 6b of a sector 6b defines the 155th to 168th switching states, and the order of these switching states. In the sector 6b, the switching state from time t0 to time t1 is the 155th switching state. The switching state from time t13 to time t14 is the 168th switching state.

(5-1. Switching Control from Switching Sequence 1a to Switching Sequence 1b)

The controller 33 is configured to, after the transition from the interval corresponding to the sector 1a to the interval corresponding to the sector 1b, switch from the control according to the switching sequence 1a to the control according to the switching sequence 1b. That is, the controller 33 is configured to, during the transition between the above-mentioned intervals, execute a switching control with the switching sequence 1a as the "first switching sequence" mentioned above and the switching sequence 1b as the "second switching sequence" mentioned above.

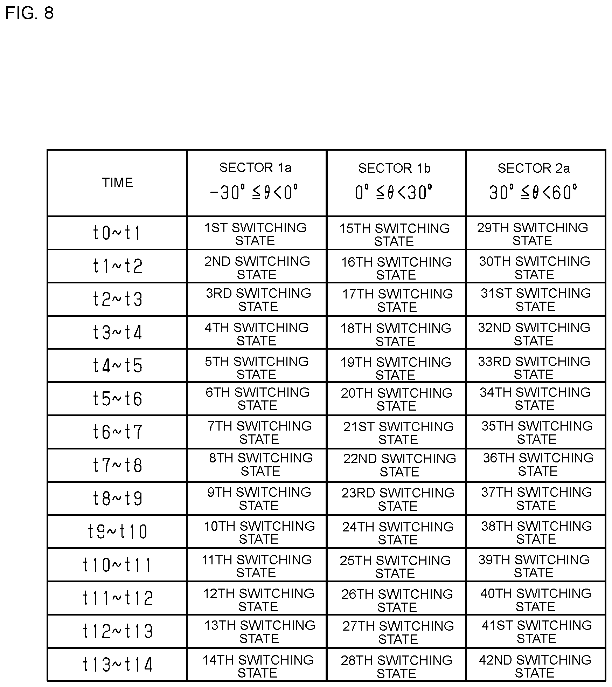

As described above, during the interval corresponding to the sector 1a, that is, during the interval in which the absolute value of the second voltage VB is greater than the absolute value of the third voltage VC, the controller 33 controls, in principle, individual bidirectional switches TSW according to the switching sequence 1a. As illustrated in Fig. 8, the switching sequence 1a defines the 1st to 14th switching states, and the order of these switching states.

Further, during the interval corresponding to the sector 1b, that is, during the interval in which the absolute value of the second voltage VB is less than the absolute value of the third voltage VC, the controller 33 controls, in principle, individual bidirectional switches TSW according to the switching sequence 1b. As illustrated in Fig. 8, the switching sequence 1b defines the 15th to 28th switching states, and the order of these switching states.

As illustrated in Figs. 5 and 6, one or more of the switching states included in the switching sequence 1b match a switching state included in the switching sequence 1a.

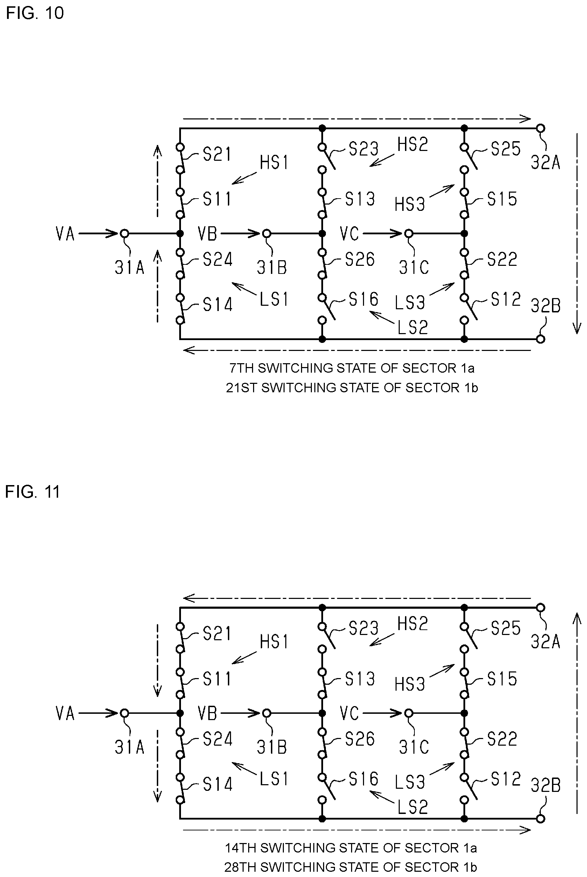

Specifically, as illustrated in Figs. 10 and 11, as for the 7th and 14th switching states of the switching sequence 1a and the 21st and 28th switching states of the switching sequence 1b, their respective combinations of ON/OFF states of the bidirectional switches TSW are all identical. That is, the four switching states are identical in terms of the ON/OFF states of the bidirectional switches TSW through which current flows when individual bidirectional switches TSW are controlled according to the corresponding switching sequence. It is to be noted that Figs. 10 to 15 depict the switching elements of individual bidirectional switches TSW in a simplified manner. That is, for convenience, each switching element is depicted as a single-pole, single-throw (SPST) switch.

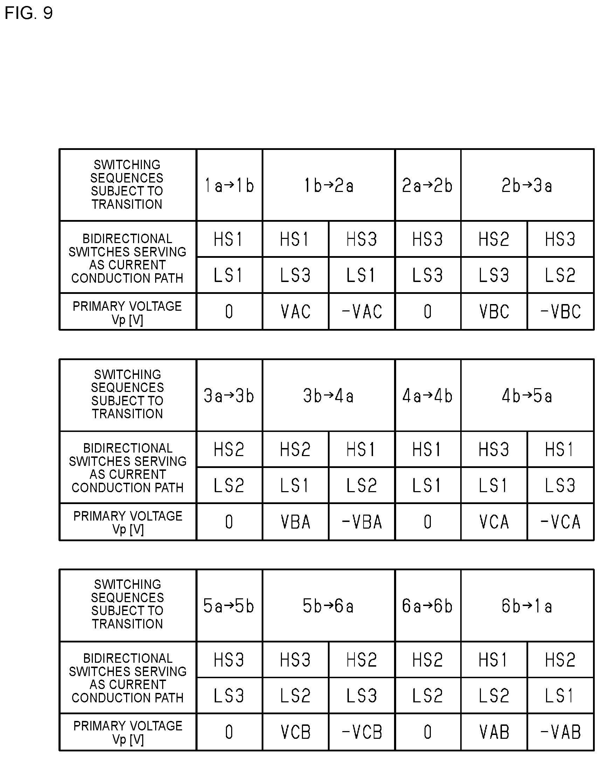

As illustrated in Fig. 9, in the control according to each switching sequence, the combination of the bidirectional switches TSW serving as a current conduction path and having the same ON/OFF state is the combination of the first high-side bidirectional switch HS1 and the first low-side bidirectional switch LS1. At this time, the primary current Ip flows through the first high-side bidirectional switch HS1 and the first low-side bidirectional switch LS1.

Accordingly, the controller 33 switches to the control according to the switching sequence 1b at the time when, during the control according to the switching sequence 1a, the switching state becomes the 7th switching state or the 14th switching state.

More specifically, when the switching state is one of the 1st to 6th switching states at the moment of transition from the interval corresponding to the sector 1a to the interval corresponding to the sector 1b, the controller 33 continues the control according to the switching sequence 1a. Then, when the switching state subsequently becomes the 7th switching state for the first time, the controller 33 switches to the control according to the switching sequence 1b. According to the present embodiment, the controller 33 controls the bidirectional switches TSW such that at time t7 at which the switching state switches from the 7th switching state to the next switching state, the switching state switches to the 22nd switching state. In other words, instead of switching from the 7th switching state to the 8th switching state of the switching sequence 1a, the controller 33 switches to the 22nd switching state of the switching sequence 1b.

When the switching state is one of the 8th to 13th switching states at the moment of transition from the interval corresponding to the sector 1a to the interval corresponding to the sector 1b, the controller 33 continues the control according to the switching sequence 1a. Then, when the switching state subsequently becomes the 14th switching state for the first time, the controller 33 switches to the control according to the switching sequence 1b. According to the present embodiment, the controller 33 controls the bidirectional switches TSW such that at time t14 at which the switching state switches from the 14th switching state to the next switching state, the switching state switches to the 15th switching state. In other words, instead of switching from the 14th switching state to the 1st switching state of the switching sequence 1a, the controller 33 switches to the 15th switching state of the switching sequence 1b.

Based on the above-mentioned control, the controller 33 is configured to, when the primary voltage Vp is less than or equal to 5% of the amplitude of the first voltage VA, switch from the control according to the switching sequence 1a to the control according to the switching sequence 1b. According to the present embodiment, the amplitude of the first voltage VA is 200 V. Accordingly, when the primary voltage Vp is greater than or equal to -10 V or less than or equal to +10 V, the controller 33 switches from the control according to the switching sequence 1a to the control according to the switching sequence 1b. It is to be noted that, as described above, according to the present embodiment, the primary voltage Vp is theoretically substantially zero during the interval from time t6 to time t7.

When the switching state is the 7th switching state at the moment of transition from the interval corresponding to the sector 1a to the interval corresponding to the sector 1b, the controller 33 switches to the control according to the 21st switching state. When the switching state at the same moment is the 14th switching state, the controller 33 switches to the control according to the 28th switching state.

(5-2. Switching Control from Switching Sequence 1b to Switching Sequence 2a)

The controller 33 is configured to, after the transition from the interval corresponding to the sector 1b to the interval corresponding to the sector 2a, switch from the control according to the switching sequence 1b to the control according to the switching sequence 2a. That is, the controller 33 is configured to, during the transition between the above-mentioned intervals, execute a switching control with the switching sequence 1b as the "first switching sequence" mentioned above and the switching sequence 2a as the "second switching sequence" mentioned above.

As described above, during the interval corresponding to the sector 2a, that is, during the interval in which the absolute value of the first voltage VA is less than the absolute value of the third voltage VC, the controller 33 controls, in principle, individual bidirectional switches TSW according to the switching sequence 2a. As illustrated in Fig. 8, the switching sequence 2a for the sector 2a defines the 29th to 42nd switching states, and the order of these switching states.

As illustrated in Figs. 6 and 7, for the control according to the switching sequence 1b and the control according to the switching sequence 2a, a combination of the bidirectional switches TSW that satisfies both the above-mentioned requirements (A) and (B) exists. That is, for each of the above-mentioned controls, a combination of the bidirectional switches TSW serving as a current conduction path and also having the same ON/OFF state exists.

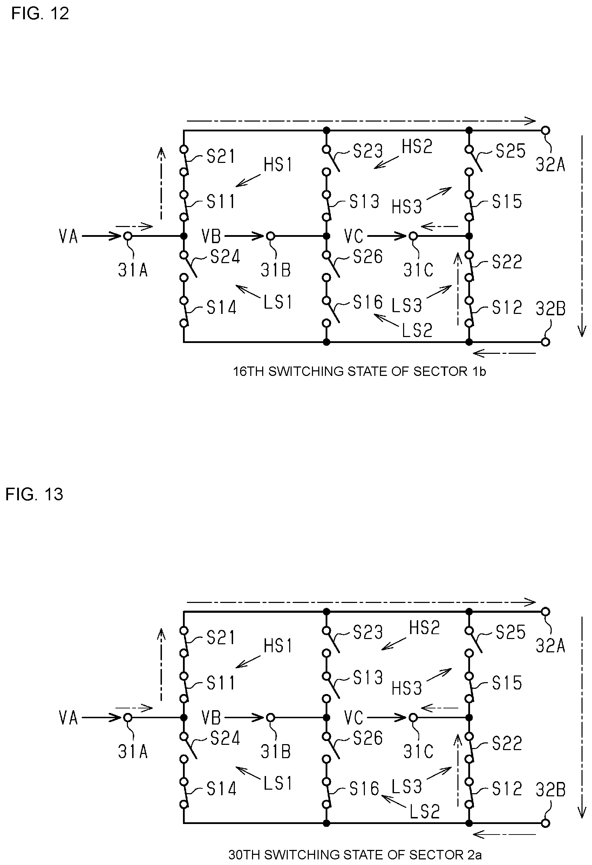

Specifically, as illustrated in Fig. 12, in the 16th switching state in the control according to the switching sequence 1b, the first high-side bidirectional switch HS1 is bidirectionally ON, and the third low-side bidirectional switch LS3 is bidirectionally ON. Accordingly, in the 16th switching state, current flows through the first high-side bidirectional switch HS1 and the third low-side bidirectional switch LS3.

As illustrated in Fig. 13, in the 30th switching state in the control according to the switching sequence 2a, the first high-side bidirectional switch HS1 is bidirectionally ON, and the third low-side bidirectional switch LS3 is bidirectionally ON. Accordingly, in the 30th switching state, current flows through the first high-side bidirectional switch HS1 and the third low-side bidirectional switch LS3.

Therefore, the ON/OFF state of the bidirectional switches TSW through which current flows in the 16th switching state in the control according to the switching sequence 1b matches the ON/OFF state of the bidirectional switches TSW through which current flows in the 30th switching state in the control according to the switching sequence 2a.

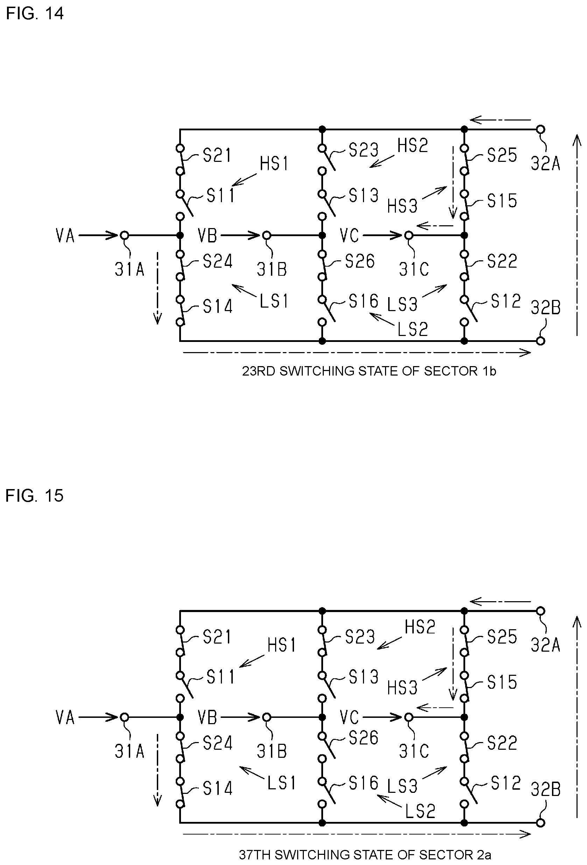

As illustrated in Fig. 14, in the 23rd switching state in the control according to the switching sequence 1b, the first low-side bidirectional switch LS1 is bidirectionally ON, and the third high-side bidirectional switch HS3 is bidirectionally ON. Accordingly, in the 23rd switching state, current flows through the first low-side bidirectional switch LS1 and the third high-side bidirectional switch HS3.

As illustrated in Fig. 15, in the 37th switching state in the control according to the switching sequence 2a, the first low-side bidirectional switch LS1 is bidirectionally ON, and the third high-side bidirectional switch HS3 is bidirectionally ON. Accordingly, in the 37th switching state, current flows through the first low-side bidirectional switch LS1 and the third high-side bidirectional switch HS3.

That is, the ON/OFF state of the bidirectional switches TSW through which current flows in the 23rd switching state in the control according to the switching sequence 1b matches the ON/OFF state of the bidirectional switches TSW through which current flows in the 37th switching state in the control according to the switching sequence 2a.

Accordingly, the controller 33 switches to the control according to the switching sequence 2a at the time when, during the control according to the switching sequence 1b, the switching state becomes the 16th switching state or the 23rd switching state. According to the present embodiment, the controller 33 switches to the control according to the switching sequence 2a at the time when, during the control according to the switching sequence 1b, the controller 33 switches the switching state from the 15th switching state to the next switching state. Alternatively, the controller 33 switches to the control according to the switching sequence 2a at the time when, during the control according to the switching sequence 1b, the controller 33 switches the switching state from the 23rd switching state to the next switching state.

More specifically, when the switching state is the 15th switching state or one of the 23rd to 28th switching states at the moment of transition from the interval corresponding to the sector 1b to the interval corresponding to the sector 2a, the controller 33 continues the control according to the switching sequence 1b. Then, when the switching state subsequently becomes the 16th switching state for the first time, the controller 33 switches to the control according to the switching sequence 2b. In other words, instead of switching from the 15th switching state to the 16th switching state, the controller 33 switches from the 15th switching state to the 30th switching state of the switching sequence 2a. In this way, according to the present embodiment, the controller 33 controls the bidirectional switches TSW such that at time t1 at which the switching state switches from the 15th switching state to the next switching state, the switching state switches to the 30th switching state.

When the switching state is one of the 16th to 22nd switching states at the moment of transition from the interval corresponding to the sector 1b to the interval corresponding to the sector 2a, the controller 33 continues the control according to the switching sequence 1b. Then, when the switching state subsequently becomes the 23rd switching state for the first time, the controller 33 switches to the control according to the switching sequence 2b. In other words, instead of switching from the 22nd switching state to the 23rd switching state, the controller 33 switches from the 22nd switching state to the 37th switching state of the switching sequence 2a. In this way, according to the present embodiment, the controller 33 controls the bidirectional switches TSW such that at time t8 at which the switching state switches from the 22nd switching state to the next switching state, the switching state switches to the 37th switching state.

Now, in the control according to each switching sequence, one of the following potential differences that has the greatest absolute value is defined as the maximum line-to-line voltage Vm: the potential difference between the first voltage VA and the second voltage VB; the potential difference between the first voltage VA and the third voltage VC; and the potential difference between the second voltage VB and the third voltage VC. The maximum line-to-line voltage Vm in the control according to the switching sequence 1b is the line-to-line voltage VAC or the line-to-line voltage VCA. The maximum line-to-line voltage Vm in the control according to the switching sequence 2a is the line-to-line voltage VAC or the line-to-line voltage VCA.

Specifically, in the state immediately before switching occurs at time t1 from the control according to the switching sequence 1b to the control according to the switching sequence 2a, the primary voltage Vp is substantially equal to the line-to-line voltage VAC. Then, immediately after the switching, the primary voltage Vp becomes equal to the line-to-line voltage VAC. It is to be noted that the direction and conduction path of the primary current Ip are the same before and after the switching.

In the state immediately before switching occurs at time t8 from the control according to the switching sequence 1b to the control according to the switching sequence 2a, the primary voltage Vp is substantially equal to the line-to-line voltage VCA. Then, immediately after the switching, the primary voltage Vp becomes equal to the line-to-line voltage VCA. It is to be noted that the direction and conduction path of the primary current Ip are substantially the same before and after the switching.

Based on the above-mentioned control, the controller 33 is configured to, at the time when the primary voltage Vp is the maximum line-to-line voltage Vm, switch from the control according to the first switching sequence to the control according to the second switching sequence. It is to be noted that "the time when the primary voltage Vp is the maximum line-to-line voltage Vm" refers to the time when a value reflecting the maximum line-to-line voltage Vm is output as the primary voltage Vp. Therefore, this allows for an error within the range of ±0.5% of the amplitude of the maximum line-to-line voltage Vm, which is defined as the median value.

(6. Operation According to Present Embodiment)

According to the embodiment mentioned above, a combination of the bidirectional switches TSW that satisfies both the requirements (A) and (B) described above is identified in advance. Then, when switching from the control according to the first switching sequence to the control according to the second switching sequence, the controller 33 switches the controls by using the identified combination of the bidirectional switches TSW.

If the switching sequences are switched when the ON/OFF state of the bidirectional switches TSW is not the same before and after the switching, this means that the path of current is different before and after the switching. When a switching element that is ON and conducting current is switched OFF, the switching element may be subjected to electrical stress. The expression "subjected to electrical stress" means that such a switching element is subjected to increased electrical stress compared with when a switching element that is ON and conducting substantially no current is switched to the OFF state, in other words, when zero-current switching or zero voltage switching is performed. Further, in switching the ON/OFF states of a plurality of switching elements, even if the switching elements are designed to theoretically switch their ON/OFF states simultaneously, each individual switching element actually switches its ON/OFF states at a different timing. This momentarily creates a situation where no current conduction path exists within the circuit, which may in turn lead to overvoltage such as so-called surge voltage. Further, a short-circuit current may result due to formation of a short-circuit current path within the circuit.

According to the present embodiment, the above-mentioned combination of the bidirectional switches TSW is consistent in terms of the direction and conduction path of current as well as the ON/OFF state of the switches. Therefore, even when switching sequences are switched at the timing corresponding to the above-mentioned combination of the bidirectional switches TSW, electrical stress is less likely to be applied to the switching elements. Further, the risk of overvoltage or short-circuit current decreases.

(7. Advantageous Effects of Present Embodiment)

(1) According to the above-mentioned embodiment, in each of the control according to the pre-switching sequence and the control according to the post-switching sequence, a combination of the bidirectional switches TSW serving as a current conduction path and having the same ON/OFF state exists. The controller 33 switches the switching sequences at the timing corresponding to the combination of the bidirectional switches TSW. This makes it possible to reduce the risk of electrical stress being applied to the switching elements constituting the bidirectional switches TSW.
(2) According to the above-mentioned embodiment, after the relative magnitudes of input voltages change, switching sequences are switched at the first time when the ON/OFF state of bidirectional switches TSW through which current flows matches between the control according to the pre-switching sequence and the control according to the post-switching sequence. This allows for prompt switching to a control according to a switching sequence that varies with the relative magnitudes of the input voltages, while reducing the risk of electrical stress being applied to the switching elements.
(3) According to the above-mentioned embodiment, the primary voltage Vp is less than or equal to 5% of the amplitude of the first voltage VA before and after the switching of switching sequences. Alternatively, the primary voltage Vp is equal to the maximum line-to-line voltage Vm before and after the switching of switching sequences. Since the primary voltage Vp thus remains substantially the same before and after the switching of switching sequences, the primary voltage Vp does not abruptly change. This may reduce the risk of noise being generated in the output voltage that is applied to the load 70.
(4) According to the above-mentioned embodiment, each bidirectional switch TSW includes two switching elements connected in series with the respective anode terminals of the body diodes of the two switching elements being connected to each other. This configuration allows for relatively simple and low-cost production of the power conversion circuit 30.

<Variations>
The embodiment described above and variations described below can be implemented in combination with each other as long as no technical contradictions occur.

(Variations Related to Configuration of Power Conversion Device)

· The configuration of the power conversion device 10 is not limited to the example according to the above-mentioned embodiment. For example, the power conversion device 10 is not limited to a three-phase isolated AC-DC converter, and may also be applied to a non-isolated three-phase AC-DC converter. That is, the power conversion device 10 does not need to include one or more selected from the group consisting of the input-side low pass filter 20, the transformer circuit 40, the rectifier circuit 50, and the output-side low pass filter 60.

The three-phase AC power source 80 to be connected to the three external input terminals 11 is not limited to that of a three-phase, three-wire type but may be of a three-phase, four-wire type. Alternatively, the three-phase AC power source 80 may be of a delta-connected three-phase, three-wire type. The configuration of the power conversion device 10 may be changed as appropriate according to the type of the three-phase AC power source 80.
The input-side low pass filter 20 may include a plurality of capacitors connected between the phase lines to which the first voltage VA, the second voltage VB, and the third voltage VC are input.

· The switching elements constituting each bidirectional switch TSW are not limited to those in the example according to the above-mentioned embodiment. For example, the two switching elements of each bidirectional switch TSW may be P-channel MOSFETs. In this case, the drain terminals of the two switching elements of the bidirectional switch TSW are connected to each other.

The two switching elements of each bidirectional switch TSW may be transistors that allow current to flow in both the forward and reverse directions. In this case, the two switching elements are connected in series with their source terminals connected to each other. Specifically, each of the switching elements is, for example, a gallium nitride high electron mobility transistor (GaN-HEMT).

· The transformer circuit 40 does not need to include the fourth inductor L4. In this case, the leakage inductance of the transformer 41 can be utilized for resonance instead of the fourth inductor L4.

· The specific circuit configuration of the rectifier circuit 50 is not limited to that in the example according to the above-mentioned embodiment. For example, the rectifier circuit 50 may be a half-wave rectifier circuit.

· The number of intervals into which to divide each sector is not limited to that in the example according to the above-mentioned embodiment. For example, each sector may be divided in four, resulting in a total of 24 intervals. The above-mentioned embodiment is applicable to such a case as well.

(Variations Related to Switching Control of Switching Sequences)

· The switching control of switching sequences is not limited to that in the example according to the above-mentioned embodiment. For example, the switching control from the switching sequence 1a to the switching sequence 1b can be changed as in (Example 1) to (Example 4) described below. The switching control from the switching sequence 1b to the switching sequence 2a can be changed as in (Example 5) to (Example 7) described below. It is to be noted, however, that as for the timing at which to switch switching sequences, the switching is preferably performed in a switching state that has a sufficiently long duration. For example, it is more preferable to switch to the second switching sequence in the (k+5)th switching state between time t4 and time t5 than to switch to the second switching sequence in the (k+4)th switching state between time t3 and time t4 of the first switching sequence.

· Switching Control From Switching Sequence 1a to Switching Sequence 1b

(Example 1) The controller 33 may be configured to control the bidirectional switches TSW such that, at time t7 when the controller 33 switches the switching state from the 7th switching state to the next switching state, the switching state switches to the 15th switching state.

(Example 2) The controller 33 may be configured to control the bidirectional switches TSW such that the switching state switches from the 7th switching state to the 21st switching state or the 28th switching state. At this time, the control may be performed such that the timing corresponding to time t7 of the switching sequence 1a coincides with the timing corresponding to time t6 of the switching sequence 1b. Alternatively, during the interval from time t6 to time t7 of the switching sequence 1a, the switching from the switching sequence 1a to the switching sequence 1b may be performed through processing by the program PG.

(Example 3) With regard to the switching sequences, the 6th switching state of the switching sequence 1a and the 20th switching state of the switching sequence 1b are entirely identical in their combination of the ON/OFF states of the bidirectional switches TSW. Therefore, for example, the switching sequence 1a may be switched to the switching sequence 1b at time t6 at which the 6th switching state switches to the next switching state. In other words, instead of switching to the 7th switching state of the switching sequence 1a, the controller 33 may switch to the 21st switching state or the 28th switching state of the switching sequence 1b.

(Example 4) With regard to the switching sequences, the 13th switching state of the switching sequence 1a and the 27th switching state of the switching sequence 1b are entirely identical in their combination of the ON/OFF states of the bidirectional switches TSW. In this case as well, for example, instead of switching from the 13th switching state to the 14th switching state, the controller 33 may switch to the 28th switching state of the switching sequence 1b.

In all of (Example 1) to (Example 4), with the switching sequence 1a and the switching sequence 1b being respectively defined as the "first switching sequence" and the "second switching sequence", the control according to the first switching sequence is switched to the control according to the second switching sequence at the time when matching occurs between the ON/OFF state of the bidirectional switches TSW through which current flows in the control according to the first switching sequence and the ON/OFF state of the bidirectional switches TSW through which current flows in the control according to the second switching sequence to which the first switching sequence is to be switched.

· Switching Control from Switching Sequence 1b to Switching Sequence 2a

(Example 5) The controller 33 may be configured to control the bidirectional switches TSW such that the switching state switches from the 16th switching state to the 30th switching state. At this time, the control may be performed such that the timing corresponding to time t2 of the switching sequence 1b coincides with the timing corresponding to time t1 of the switching sequence 2a. Alternatively, during the interval from time t1 to time t2 of the switching sequence 1b, the switching from the switching sequence 1b to the switching sequence 2a may be performed through processing by the program PG.

(Example 6) With regard to the switching sequences, the 17th switching state of the switching sequence 1b and the 31st switching state of the switching sequence 2a are entirely identical in their combination of the ON/OFF states of the bidirectional switches TSW. Therefore, in the switching control of the switching sequences, switching to the switching sequence 2a may likewise be performed at time t2 at which the 16th switching state switches to the next switching state. In other words, instead of switching from the 16th switching state to the 17th switching state, the controller 33 may switch to the 31st switching state of the switching sequence 2a. Alternatively, during the interval from time t2 to time t3 of the switching sequence 1b, the switching from the switching sequence 1b to the switching sequence 2a may be performed through processing by the program PG.

(Example 7) With regard to the switching sequences, the 24th switching state of the switching sequence 1b and the 38th switching state of the switching sequence 2a are entirely identical in their combination of the ON/OFF states of the bidirectional switches TSW. In this case as well, the switching to the switching sequence 2a may likewise be performed at time t9 at which the 23rd switching state switches to the next switching state. In other words, instead of switching from the 23rd switching state to the 24th switching state, the controller 33 may switch to the 38th switching state of the switching sequence 2a. Alternatively, during the interval from time t9 to time t10 of the switching sequence 1b, the switching from the switching sequence 1b to the switching sequence 2a may be performed through processing by the program PG.

In all of (Example 5) to (Example 7), with the switching sequence 1b and the switching sequence 2a being respectively defined as the "first switching sequence" and the "second switching sequence", the control according to the first switching sequence is switched to the control according to the second switching sequence at the time when matching occurs between the ON/OFF state of the bidirectional switches TSW through which current flows in the control according to the first switching sequence and the ON/OFF state of the bidirectional switches TSW through which current flows in the control according to the second switching sequence to which the first switching sequence is to be switched.

· As illustrated in Fig. 9, with the pre-switching switching sequence and the post-switching switching sequence being respectively defined as the "first switching sequence" and the "second switching sequence", the same switching control as mentioned above is also applicable to switching of other switching sequences.

For example, in the switching control from the switching sequence 2a to the switching sequence 2b, the switching sequence 2a is defined as the "first switching sequence", and the switching sequence 2b is defined as the "second switching sequence." During the interval corresponding to the sector 2a, that is, during the interval in which the first voltage VA is the greatest voltage and the absolute value of the first voltage VA is greater than the absolute value of the second voltage VB, the controller 33 controls individual bidirectional switches TSW according to the switching sequence 2a. Then, the switching sequence 2a may be switched to the switching sequence 2b at the following timing: after the transition to the interval corresponding to the sector 2b occurs, that is, after the absolute value of the second voltage VB becomes greater than the absolute value of the first voltage VA, and when the above-mentioned combination matches for the first time between these sequences.

For example, in the switching control from the switching sequence 2b to a switching sequence 3a, the switching sequence 2b is defined as the "first switching sequence", and the switching sequence 3a is defined as the "second switching sequence." During the interval corresponding to the sector 2b, that is, during the interval in which the second voltage VB is the greatest voltage and the absolute value of the third voltage VC is greater than the absolute value of the second voltage VB, the controller 33 controls individual bidirectional switches TSW according to the switching sequence 2b. Then, the switching sequence 2b may be switched to the switching sequence 3a at the following timing: after the transition to the interval corresponding to the sector 3a occurs, that is, after the absolute value of the second voltage VB becomes greater than the absolute value of the third voltage VC, and when the above-mentioned combination matches for the first time between these sequences.

<Supplementary Notes>

The technical idea that can be derived from the embodiment and the variations mentioned above will now be described.

[1] A power conversion circuit comprising: a first input terminal, a second input terminal, and a third input terminal that are connected to a three-phase AC power source and to which a first voltage, a second voltage, and a third voltage are respectively input in a one-to-one correspondence, the first voltage, the second voltage, and the third voltage being AC voltages that differ in phase from each other; a plurality of bidirectional switches each connected to a corresponding one of the first input terminal, the second input terminal, and the third input terminal; a first output terminal and a second output terminal that are connected to the plurality of bidirectional switches and configured to output AC power; and a controller configured to control the plurality of bidirectional switches according to a first switching sequence or a second switching sequence, the first switching sequence defining a plurality of combinations of ON/OFF states of the plurality of bidirectional switches and an order in which to switch between the plurality of combinations, the second switching sequence defining, in a manner different from the first switching sequence, a plurality of combinations of ON/OFF states of the plurality of bidirectional switches and an order in which to switch between the plurality of combinations, wherein the controller is configured to switch from a control according to the first switching sequence to a control according to the second switching sequence at a time when matching occurs between an ON/OFF state of bidirectional switches through which current flows among the plurality of bidirectional switches in the control according to the first switching sequence and an ON/OFF state of bidirectional switches through which current flows among the plurality of bidirectional switches in the control according to the second switching sequence to which the first switching sequence is to be switched.

[2] The power conversion circuit according to [1], wherein the controller is configured to control the plurality of bidirectional switches according to the first switching sequence during an interval in which the second voltage is greater in absolute value than the third voltage, and wherein the controller is configured to switch from the control according to the first switching sequence to the control according to the second switching sequence after the third voltage becomes greater in absolute value than the second voltage and at a time when matching occurs between an ON/OFF state of bidirectional switches through which current flows among the plurality of bidirectional switches in the control according to the first switching sequence and an ON/OFF state of bidirectional switches through which current flows among the plurality of bidirectional switches in the plurality of combinations in the control according to the second switching sequence to which the first switching sequence is to be switched.

[3] The power conversion circuit according to [2], wherein the controller is configured to switch from the control according to the first switching sequence to the control according to the second switching sequence at a time when the first output terminal has a difference in potential with respect to the second output terminal less than or equal to 5% of an amplitude of the first voltage.

[4] The power conversion circuit according to any one of [1] to [3], wherein at least one of the plurality of combinations included in the second switching sequence matches a combination of the plurality of combinations included in the first switching sequence, and wherein the controller is configured to switch from the control according to the first switching sequence to the control according to the second switching sequence at a time when matching occurs between the combination in the control according to the first switching sequence and the at least one combination included in the second switching sequence.

[5] The power conversion circuit according to any one of [1] to [4], wherein the controller is configured to control the plurality of bidirectional switches according to the first switching sequence during an interval in which the first voltage is greater in absolute value than the third voltage, and wherein the controller is configured to switch from the control according to the first switching sequence to the control according to the second switching sequence after the third voltage becomes greater in absolute value than the first voltage and at a time when matching occurs between an ON/OFF state of bidirectional switches through which current flows among the plurality of bidirectional switches in the control according to the first switching sequence and an ON/OFF state of bidirectional switches through which current flows among the plurality of bidirectional switches in the plurality of combinations in the control according to the second switching sequence to which the first switching sequence is to be switched.

[6] The power conversion circuit according to [5], wherein of a potential difference between the first voltage and the second voltage, a potential difference between the first voltage and the third voltage, and a potential difference between the second voltage and the third voltage, a greatest potential difference in absolute value is defined as a maximum line-to-line voltage, and wherein the controller is configured to switch from the control according to the first switching sequence to the control according to the second switching sequence at a time when the first output terminal has a potential difference with respect to the second output terminal equal to the maximum line-to-line voltage.

[7] The power conversion circuit according to any one of [1] to [6], wherein each of the plurality of bidirectional switches includes two switching elements connected in series with respective anode terminals of body diodes of the two switching elements being connected to each other.

[8] A program for use in a power conversion circuit, the power conversion circuit including a first input terminal, a second input terminal, and a third input terminal that are connected to a three-phase AC power source and to which a first voltage, a second voltage, and a third voltage are respectively input in a one-to-one correspondence, the first voltage, the second voltage, and the third voltage being AC voltages that differ in phase from each other, a plurality of bidirectional switches each connected to a corresponding one of the first input terminal, the second input terminal, and the third input terminal, a first output terminal and a second output terminal that are configured to output AC power, and a controller configured to control the plurality of bidirectional switches according to a first switching sequence or a second switching sequence, the first switching sequence defining a plurality of combinations of ON/OFF states of the plurality of bidirectional switches and an order in which to switch between the plurality of combinations, the second switching sequence defining, in a manner different from the first switching sequence, a plurality of combinations of ON/OFF states of the plurality of bidirectional switches and an order in which to switch between the plurality of combinations, the program causing the controller to switch from a control according to the first switching sequence to a control according to the second switching sequence at a time when matching occurs between an ON/OFF state of bidirectional switches through which current flows among the plurality of bidirectional switches in the control according to the first switching sequence, and an ON/-OFF state of bidirectional switches through which current flows among the plurality of bidirectional switches in the control according to the second switching sequence to which the first switching sequence is to be switched.

Reference Signs List

| 10 | power conversion device |
| 30 | power conversion circuit |
| 31A | first input terminal |
| 31B | second input terminal |
| 31C | third input terminal |
| 32A | first output terminal |
| 32B | second output terminal |
| 33 | controller |
| TSW | bidirectional switch |
| 80 | three-phase AC power source |

**Claims**

1.  A power conversion circuit comprising:

    a first input terminal, a second input terminal, and a third input terminal that are connected to a three-phase AC power source and to which a first voltage, a second voltage, and a third voltage are respectively input in a one-to-one correspondence, the first voltage, the second voltage, and the third voltage being AC voltages that differ in phase from each other;
a plurality of bidirectional switches each connected to a corresponding one of the first input terminal, the second input terminal, and the third input terminal;
a first output terminal and a second output terminal that are connected to the plurality of bidirectional switches and configured to output AC power; and
a controller configured to control the plurality of bidirectional switches according to a first switching sequence or a second switching sequence, the first switching sequence defining a plurality of combinations of ON/OFF states of the plurality of bidirectional switches and an order in which to switch between the plurality of combinations, the second switching sequence defining, in a manner different from the first switching sequence, a plurality of combinations of ON/-OFF states of the plurality of bidirectional switches and an order in which to switch between the plurality of combinations,
wherein the controller is configured to switch from a control according to the first switching sequence to a control according to the second switching sequence at a time when matching occurs between an ON/OFF state of bidirectional switches through which current flows among the plurality of bidirectional switches in the control according to the first switching sequence and an ON/OFF state of bidirectional switches through which current flows among the plurality of bidirectional switches in the control according to the second switching sequence to which the first switching sequence is to be switched.

2.  The power conversion circuit according to Claim 1,

    wherein the controller is configured to control the plurality of bidirectional switches according to the first switching sequence during an interval in which the second voltage is greater in absolute value than the third voltage, and
    wherein the controller is configured to switch from the control according to the first switching sequence to the control according to the second switching sequence after the third voltage becomes greater in absolute value than the second voltage and at a time when matching occurs between an ON/OFF state of bidirectional switches through which current flows among the plurality of bidirectional switches in the control according to the first switching sequence and an ON/OFF state of bidirectional switches through which current flows among the plurality of bidirectional switches in the plurality of combinations in the control according to the second switching sequence to which the first switching sequence is to be switched.

3. The power conversion circuit according to Claim 2, wherein the controller is configured to switch from the control according to the first switching sequence to the control according to the second switching sequence at a time when the first output terminal has a difference in potential with respect to the second output terminal less than or equal to 5% of an amplitude of the first voltage.

4. The power conversion circuit according to any one of Claims 1 to 3,

wherein at least one of the plurality of combinations included in the second switching sequence matches a combination of the plurality of combinations included in the first switching sequence, and
wherein the controller is configured to switch from the control according to the first switching sequence to the control according to the second switching sequence at a time when matching occurs between the combination in the control according to the first switching sequence and the at least one combination included in the second switching sequence.

5. The power conversion circuit according to any one of Claims 1 to 4,

wherein the controller is configured to control the plurality of bidirectional switches according to the first switching sequence during an interval in which the first voltage is greater in absolute value than the third voltage, and
wherein the controller is configured to switch from the control according to the first switching sequence to the control according to the second switching sequence after the third voltage becomes greater in absolute value than the first voltage and at a time when matching occurs between an ON/OFF state of bidirectional switches through which current flows among the plurality of bidirectional switches in the control according to the first switching sequence and an ON/OFF state of bidirectional switches through which current flows among the plurality of bidirectional switches in the plurality of combinations in the control according to the second switching sequence to which the first switching sequence is to be switched.

6. The power conversion circuit according to Claim 5,

wherein of a potential difference between the first voltage and the second voltage, a potential difference between the first voltage and the third voltage, and a potential difference between the second voltage and the third voltage, a greatest potential difference in absolute value is defined as a maximum line-to-line voltage, and
wherein the controller is configured to switch from the control according to the first switching sequence to the control according to the second switching sequence at a time when the first output terminal has a potential difference with respect to the second output terminal equal to the maximum line-to-line voltage.

7. The power conversion circuit according to any one of Claims 1 to 6,
wherein each of the plurality of bidirectional switches includes two switching elements connected in series with respective anode terminals of body diodes of the two switching elements being connected to each other.

8. A program for use in a power conversion circuit, the power conversion circuit including

a first input terminal, a second input terminal, and a third input terminal that are connected to a three-phase AC power source and to which a first voltage, a second voltage, and a third voltage are respectively input in a one-to-one correspondence, the first voltage, the second voltage, and the third voltage being AC voltages that differ in phase from each other,
a plurality of bidirectional switches each connected to a corresponding one of the first input terminal, the second input terminal, and the third input terminal,
a first output terminal and a second output terminal that are configured to output AC power, and
a controller configured to control the plurality of bidirectional switches according to a first switching sequence or a second switching sequence, the first switching sequence defining a plurality of combinations of ON/OFF states of the plurality of bidirectional switches and an order in which to switch between the plurality of combinations, the second switching sequence defining, in a manner different from the first switching sequence, a plurality of combinations of ON/OFF states of the plurality of bidirectional switches and an order in which to switch between the plurality of combinations,
the program causing the controller to switch from a control according to the first switching sequence to a control according to the second switching sequence at a time when matching occurs between an ON/OFF state of bidirectional switches through which current flows among the plurality of bidirectional switches in the control according to the first switching sequence, and an ON/OFF state of bidirectional switches through which current flows among the plurality of bidirectional switches in the control according to the second switching sequence to which the first switching sequence is to be switched.

FIG. 1

EP 4 779 857 A1

FIG. 2

23

FIG. 3

FIG. 4

FIG. 5

SECTOR 1a

FIG. 6

SECTOR 1b

FIG. 7

FIG. 8

| TIME | SECTOR 1a $-30^{\circ} \leqq \theta < 0^{\circ}$ | SECTOR 1b $0^{\circ} \leqq \theta < 30^{\circ}$ | SECTOR 2a $30^{\circ} \leqq \theta < 60^{\circ}$ |
|---|---|---|---|
| t0~t1 | 1ST SWITCHING STATE | 15TH SWITCHING STATE | 29TH SWITCHING STATE |
| t1~t2 | 2ND SWITCHING STATE | 16TH SWITCHING STATE | 30TH SWITCHING STATE |
| t2~t3 | 3RD SWITCHING STATE | 17TH SWITCHING STATE | 31ST SWITCHING STATE |
| t3~t4 | 4TH SWITCHING STATE | 18TH SWITCHING STATE | 32ND SWITCHING STATE |
| t4~t5 | 5TH SWITCHING STATE | 19TH SWITCHING STATE | 33RD SWITCHING STATE |
| t5~t6 | 6TH SWITCHING STATE | 20TH SWITCHING STATE | 34TH SWITCHING STATE |
| t6~t7 | 7TH SWITCHING STATE | 21ST SWITCHING STATE | 35TH SWITCHING STATE |
| t7~t8 | 8TH SWITCHING STATE | 22ND SWITCHING STATE | 36TH SWITCHING STATE |
| t8~t9 | 9TH SWITCHING STATE | 23RD SWITCHING STATE | 37TH SWITCHING STATE |
| t9~t10 | 10TH SWITCHING STATE | 24TH SWITCHING STATE | 38TH SWITCHING STATE |
| t10~t11 | 11TH SWITCHING STATE | 25TH SWITCHING STATE | 39TH SWITCHING STATE |
| t11~t12 | 12TH SWITCHING STATE | 26TH SWITCHING STATE | 40TH SWITCHING STATE |
| t12~t13 | 13TH SWITCHING STATE | 27TH SWITCHING STATE | 41ST SWITCHING STATE |
| t13~t14 | 14TH SWITCHING STATE | 28TH SWITCHING STATE | 42ND SWITCHING STATE |

FIG. 9

| SWITCHING SEQUENCES SUBJECT TO TRANSITION | 1a→1b | 1b→2a | | 2a→2b | 2b→3a | |
|---|---|---|---|---|---|---|
| BIDIRECTIONAL SWITCHES SERVING AS CURRENT CONDUCTION PATH | HS1 | HS1 | HS3 | HS3 | HS2 | HS3 |
| | LS1 | LS3 | LS1 | LS3 | LS3 | LS2 |
| PRIMARY VOLTAGE Vp [V] | 0 | VAC | −VAC | 0 | VBC | −VBC |

| SWITCHING SEQUENCES SUBJECT TO TRANSITION | 3a→3b | 3b→4a | | 4a→4b | 4b→5a | |
|---|---|---|---|---|---|---|
| BIDIRECTIONAL SWITCHES SERVING AS CURRENT CONDUCTION PATH | HS2 | HS2 | HS1 | HS1 | HS3 | HS1 |
| | LS2 | LS1 | LS2 | LS1 | LS1 | LS3 |
| PRIMARY VOLTAGE Vp [V] | 0 | VBA | −VBA | 0 | VCA | −VCA |

| SWITCHING SEQUENCES SUBJECT TO TRANSITION | 5a→5b | 5b→6a | | 6a→6b | 6b→1a | |
|---|---|---|---|---|---|---|
| BIDIRECTIONAL SWITCHES SERVING AS CURRENT CONDUCTION PATH | HS3 | HS3 | HS2 | HS2 | HS1 | HS2 |
| | LS3 | LS2 | LS3 | LS2 | LS2 | LS1 |
| PRIMARY VOLTAGE Vp [V] | 0 | VCB | −VCB | 0 | VAB | −VAB |

FIG. 10

7TH SWITCHING STATE OF SECTOR 1a
21ST SWITCHING STATE OF SECTOR 1b

FIG. 11

14TH SWITCHING STATE OF SECTOR 1a
28TH SWITCHING STATE OF SECTOR 1b

FIG. 12

16TH SWITCHING STATE OF SECTOR 1b

FIG. 13

30TH SWITCHING STATE OF SECTOR 2a

FIG. 14

23RD SWITCHING STATE OF SECTOR 1b

FIG. 15

37TH SWITCHING STATE OF SECTOR 2a

## INTERNATIONAL SEARCH REPORT

| International application No. |
| --- |
| **PCT/JP2024/038156** |

**A. CLASSIFICATION OF SUBJECT MATTER**

*H02M 5/257*(2006.01)i
FI:   H02M5/257 B

According to International Patent Classification (IPC) or to both national classification and IPC

**B. FIELDS SEARCHED**

Minimum documentation searched (classification system followed by classification symbols)

H02M5/257

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2016-187279 A (FUJITSU GENERAL LIMITED) 27 October 2016 (2016-10-27) paragraphs [0016]-[0137], fig. 1-9 | 1-8 |
| A | JP 2017-158258 A (FUJITSU GENERAL LIMITED) 07 September 2017 (2017-09-07) paragraphs [0013]-[0150], fig. 1-17 | 1-8 |
| A | JP 2020-099131 A (TDK CORPORATION) 25 June 2020 (2020-06-25) entire text, all drawings | 1-8 |
| A | JP 2013-055868 A (NISSAN MOTOR CO., LTD.) 21 March 2013 (2013-03-21) entire text, all drawings | 1-8 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 December 2024** | **07 January 2025** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/038156**

| Patent document cited in search report | | | Publication date (day/month/year) | Patent family member(s) | | | Publication date (day/month/year) |
|---|---|---|---|---|---|---|---|
| JP | 2016-187279 | A | 27 October 2016 | US | 2018/0048242 | A1 | |
| | | | | paragraphs [0024]-[0160], fig. 1-9 | | | |
| | | | | WO | 2016/158805 | A1 | |
| | | | | EP | 3276813 | A1 | |
| | | | | CN | 107431439 | A | |
| JP | 2017-158258 | A | 07 September 2017 | US | 2018/0115162 | A1 | |
| | | | | paragraphs [0042]-[0192], fig. 1-17 | | | |
| | | | | WO | 2016/158804 | A1 | |
| | | | | EP | 3280041 | A1 | |
| | | | | CN | 107431445 | A | |
| JP | 2020-099131 | A | 25 June 2020 | (Family: none) | | | |
| JP | 2013-055868 | A | 21 March 2013 | US | 2014/0226386 | A1 | |
| | | | | entire text, all drawings | | | |
| | | | | WO | 2013/035781 | A1 | |
| | | | | EP | 2755312 | A1 | |
| | | | | CN | 103688456 | A | |
| | | | | KR | 10-2014-0042915 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180262103